# EUROPÄISCHE PATENTSCHRIFT

(11) **EP 1 802 896 B1**
(45) Veröffentlichungstag und Bekanntmachung des Hinweises auf die Patenterteilung: **05.03.2008**
(21) Anmeldenummer: 05791411.1
(22) Anmeldetag: 20.10.2005
(51) Int. Cl.: F16H 47/04

(54) **LEISTUNGSVERZWEIGUNGSGETRIEBE SOWIE VERFAHREN ZUM BETRIEB EINES SOLCHEN GETRIEBES**
POWER-BRANCHED TRANSMISSION AND METHOD FOR THE OPERATION OF SUCH A TRANSMISSION
TRANSMISSION A REPARTITION DE PUISSANCE ET PROCEDE POUR FAIRE FONCTIONNER CETTE TRANSMISSION

(30) Priorität: 20.10.2004 CH 17332004
(43) Veröffentlichungstag der Anmeldung: 04.07.2007
(73) Patentinhaber: Markus Liebherr International AG, 1700 Fribourg (CH)
(72) Erfinder: LIEBHERR, Markus, CH-1630 Bulle (CH); HÄGLSPERGER, Josef, 84140 Gangkofen (DE); DZIUBA, Peter, 88699 Frickingen-Altheim (DE); BAUER, Josef, 85405 Nandlstadt (DE); KIRCHHOFF, Manfred, 39221 Eggersdorf (DE)
(74) Vertreter: Ottow, Jens M.
(86) Internationale Anmeldenummer: PCT/CH2005/000612
(87) Internationale Veröffentlichungsnummer: WO 2006/042434

(56) Entgegenhaltungen:
- DE-A1- 4 010 919
- DE-A1- 4 343 401
- US-A- 3 990 327
- US-A- 4 279 194
- US-A- 4 976 665
- US-A1- 2004 173 089

## Beschreibung

### TECHNISCHES GEBIET

Die vorliegende Erfindung bezieht sich auf das Gebiet der Fahrzeuggetriebe. Sie betrifft ein Leistungsverzweigungsgetriebe gemäss dem Oberbegriff des Anspruchs 1 sowie ein Verfahren zum Betrieb eines solchen Getriebes.

### STAND DER TECHNIK

Leistungsverzweigungsgetriebe, insbesondere für den Einsatz bei land- oder bauwirtschaftlich genutzten Fahrzeugen wie z.B. Traktoren, sind seit langem bekannt. Bei solchen Leistungsverzweigungsgetrieben wird die an einer Eingangswelle bzw. Antriebswelle anliegende, üblicherweise von einem Verbrennungsmotor abgegebene Leistung auf einen ersten mechanischen Leistungszweig mit fester Übersetzung und einen zweiten, in der Übersetzung stufenlos veränderbaren Leistungszweig aufgeteilt und anschliessend wieder zusammengeführt, um an einer Ausgangswelle bzw. Abtriebswelle zur Verfügung zu stehen. Der zweite Leistungszweig ist meistens als hydrostatischer Zweig ausgebildet, bei dem zwei hydrostatische Axialkolbenmaschinen (Hydrostaten) von Schrägachsen- oder Schrägscheibentyp, die hydraulisch miteinander verbunden sind, wahlweise als Pumpe oder Motor arbeiten. Die Übersetzung kann dabei durch die Veränderung des Schwenkwinkels des Zylinderblocks bzw. der Schrägscheibe verändert werden. Die Aufteilung der Leistung auf die beiden Leistungszweige und die Zusammenführung der verzweigten Leistungen erfolgt üblicherweise mittels eines Planetengetriebes. Leistungsverzweigungsgetriebe der beschriebenen Art sind in unterschiedlicher Ausgestaltung in der DE-A1-27 57 300, der DE-C2-29 04 572, der DE-A1-29 50 619, der DE-A1-37 07 382, der DE-A1-37 26 080, der DE-A1-39 12 369, der DE-A1-39 12 386, der DE-A1-43 43 401, der DE-A1-43 43 402, der EP-B1-0 249 001 und der EP-A2-1 273 828 offenbart.

Um ein Leistungsverzweigungsgetriebe mit Erfolg in der Praxis einsetzen zu können, sollte es sich generell durch die folgenden Eigenschaften auszeichnen:
- Das Getriebe sollte einen hohen Wirkungsgrad über den ganzen Geschwindigkeitsbereich aufweisen. Dies sollte insbesondere bei den hohen Fahrgeschwindigkeiten, die im Strassenverkehr über einen längeren Zeitraum gefahren werden, der Fall sein.
- Das Getriebe sollte kompakt aufgebaut sein, um den Einbau in die unterschiedlichsten Fahrzeuge möglichst ohne konstruktive Einschränkungen zu ermöglichen.
- Das Getriebe sollte die Übertragung von hohen Leistungen ermöglichen.
- Das Getriebe sollte zur Begrenzung der Leistungsverluste und Erhöhung der Funktionssicherheit möglichst einfach aufgebaut sein.
- Das Getriebe sollte eine vollumfängliche elektronische Steuerung im Zusammenhang mit dem Motormanagement ermöglichen und auch bei Ausfall bestimmter Steuerungselemente ausreichende Notfahrprogramme zur Verfügung stellen.

In der eingangs genannten DE-A1-43 43 401, die alle Merkmale der Oberbegriffe der unabhängigen Ansprüche 1 und 19 offenbart, ist bereits ein als SHL-Getriebe (Stufenloses Hydrostatisches Leistungsverzweigungsgetriebe) bezeichnetes Leistungsverzweigungsgetriebe beschrieben worden, das sich durch zwei hydraulisch gekoppelte gleichartige Hydrostaten in Schrägachsenbauweise auszeichnet, die über Kupplungspaare bzw. Wechselschaltelemente K1/K2 bzw. K3/K4 auf unterschiedliche Weise mit einem Planetendifferentialgetriebe koppelbar sind. Das bekannte SHL-Getriebe ist unter der Typbezeichnung SHL-Z bei Stadtbussen eingesetzt und getestet worden. Die beiden eingesetzten Hydrostaten haben einen Schwenkbereich von lediglich 0-25°. Für die Vorwärtsfahrt ergeben sich dabei 3 Fahrstufen bzw. Fahrbereiche: Im ersten Fahrbereich ist im Anfahrpunkt der hydrostatische Anteil der übertragenen Leistung 100% und geht dann linear mit der Geschwindigkeit gegen Null. Im zweiten Fahrbereich geht er von Null auf ein Maximum von etwa 27% und dann wieder zurück auf Null. Im dritten Fahrbereich geht er von Null auf einen Maximalwert von 13% bei der höchsten Vorwärtsgeschwindigkeit.

Nachteilig ist bei dem bekannten SHL-Getriebe nicht nur die Unterteilung der Vorwärtsfahrt in drei Fahrbereiche, die zu einem erhöhten Schalt- und Steueraufwand führt, sondern vor allem der bei der Höchstgeschwindigkeit deutlich von Null abweichende hydrostatische Anteil der Leistungsübertragung. Dieser führt bei Überlandfahrten, bei denen die hohen Geschwindigkeiten praktisch konstant über einen längeren Zeitraum gefahren werden, zu unnötigen Wirkungsgradverlusten, die sich negativ auf den Verbrauch und die Abgasemission auswirken.

### DARSTELLUNG DER ERFINDUNG

Es ist daher Aufgabe der Erfindung, ein stufenloses hydrostatisches Leistungsverzweigungsgetriebe zu schaffen, welches die Nachteile bekannter Getriebe vermeidet und sich insbesondere durch einen hohen und verbesserten Wirkungsgrad bei schneller Vorwärtsfahrt auszeichnet, sowie ein Verfahren zum Betrieb eines solchen Getriebes anzugeben.

Die Aufgabe wird durch die Gesamtheit der Merkmale der Ansprüche 1 und 19 gelöst. Der Kern der Erfindung besteht darin, bei der eingangs beschriebenen Getriebekonfiguration die beiden hydrostatischen Axialkolbenmaschinen als Weitwinkelhydrostaten mit einem Schwenkwinkelbereich von wenigstens 45° auszubilden und die Verstellung der Winkel der hydrostatischen Axialkolbenmaschinen, die hydraulische Verbindung zwischen den beiden hydrostatischen Axialkolbenmaschinen und die Ansteuerung der Kupplungen derart vorzunehmen, dass die Vorwärtsfahrt in zwei aufeinanderfolgende Fahrbereiche unterteilt wird, und dass der Anteil der über den hydraulischen Zweig übertragenen Leistung am Ende jedes der beiden Fahrbereiche jeweils gegen Null geht. Durch diese Massnahmen wird bei hohen Geschwindigkeiten ein verschwindender hydrostatischer Anteil der Leistungsübertragung erreicht, der sich zugleich in einem deutlich verbesserten Wirkungsgrad niederschlägt. Besonders günstig sind die Betriebswerte, wenn gemäss einer bevorzugten Ausgestaltung die beiden hydrostatischen Axialkolbenmaschinen einen Schwenkwinkelbereich von wenigstens 50° aufweisen.

Eine bevorzugte Ausgestaltung des erfindungsgemässen Getriebes ist dadurch gekennzeichnet, dass das Stufenplanetengetriebe an einem Planetensteg drehbar gelagerte Doppelplanetenräder mit einem kleineren Zahnrad und einem grösseren Zahnrad umfasst, welche mit einem grösseren Sonnenrad und einem kleineren Sonnenrad kämmen und mit dem grösseren Zahnrad in einem Hohlrad ablaufen, dass das grössere Sonnenrad mit der Eingangswelle gekoppelt ist, dass die erste hydrostatische Axialkolbenmaschine über eine erste Kupplung mit dem Hohlrad und über eine zweite Kupplung mit der Eingangswelle koppelbar ist, dass die zweite hydrostatische Axialkolbenmaschinen über eine dritte Kupplung mit dem Planetensteg und über eine vierte Kupplung mit dem kleineren Sonnenrad koppelbar ist, dass die Ausgangswelle mit dem Planetensteg gekoppelt ist, dass das grössere Sonnenrad drehfest auf der Eingangswelle sitzt, dass an den Planetensteg ein erstes Stirnrad angeflanscht ist, und dass auf der Ausgangswelle ein zweites Stirnrad drehfest-angeordnet ist, welches mit dem ersten Stirnrad kämmt.

Insbesondere zeichnet sich das Leistungsverzweigungsgetriebe dadurch aus, dass am Hohlrad ein drittes Stirnrad angeflanscht ist und die Kopplung der ersten hydrostatischen Axialkolbenmaschine mittels der ersten Kupplung über ein viertes Stirnrad erfolgt, welches mit dem dritten Stirnrad kämmt, dass auf der Eingangswelle ein fünftes Stirnrad drehfest angeordnet ist und die Kopplung der ersten hydrostatischen Axialkolbenmaschine mittels der zweiten Kupplung über ein sechstes Stirnrad und ein Umkehrrad erfolgt, welches mit dem fünften Stirnrad und dem sechsten Stirnrad kämmt, dass die Kopplung der zweiten hydrostatischen Axialkolbenmaschine mittels der dritten Kupplung über ein siebtes Stirnrad erfolgt, welches mit dem ersten Stirnrad kämmt, und dass das kleinere Sonnenrad über eine die Eingangswelle umgebende Hohlwelle mit einem achten Stirnrad drehfest verbunden ist und die Kopplung der zweiten hydrostatischen Axialkolbenmaschine mittels der vierten Kupplung über ein neuntes Stirnrad erfolgt, welches mit dem achten Stirnrad kämmt.

Besonders kompakt wird das Leistungsverzweigungsgetriebe, wenn die Eingangswelle drehfest mit einer koaxialen Zapfwelle verbunden ist, welche durch das Leistungsverzweigungsgetriebe hindurchgeht.

Die hydrostatischen Axialkolbenmaschinen sind vorzugsweise jeweils mit einer Abtriebswelle ausgestattet, die Kupplungen sind als hydraulisch betätigbare Lamellenkupplungen ausgebildet und auf den Abtriebswellen angeordnet, und die Kupplungen werden über in den Abtriebswellen verlaufende, axiale Hydraulikkanäle betätigt.

Bevorzugt sind die Eingangswelle, das Stufenplanetengetriebe, die beiden hydrostatischen Axialkolbenmaschinen und die Ausgangswelle platzsparend in einem gemeinsamen Gehäuse untergebracht, wobei die beiden hydrostatischen Axialkolbenmaschinen über im Gehäuse verlaufende Hochdruckkanäle hydraulisch miteinander verbindbar sind. Das Gehäuse umfasst ein Gehäuseunterteil und ein Gehäuseoberteil, am Gehäuseoberteil ist ein Hochdruckblock angeordnet, in welchem die Hochdruckkanäle untergebracht sind, die beiden hydrostatischen Axialkolbenmaschinen umfassen jeweils einen Zylinderblock mit einer Mehrzahl von Zylinderbohrungen und darin verschiebbar gelagerten Kolben, welcher Zylinderblock um eine horizontale Achse drehbar in einem Schwenkgehäuse gelagert ist, die Schwenkgehäuse sind jeweils mit einem oberen Lagerzapfen im Hochdruckblock um eine vertikale Schwenkachse verschwenkbar gelagert, und die Zylinderbohrungen sind über im Schwenkgehäuse bis in die oberen Lagerzapfen hinein verlaufende Verbindungskanäle mit den Hochdruckkanälen im Hochdruckblock verbunden.

Insbesondere sind bei jeder der beiden hydrostatischen Axialkolbenmaschinen die oberhalb einer horizontalen Mittelebene liegenden Zylinderbohrungen des Zylinderblocks über obere Öffnungen im Schwenkgehäuse mit einem oberen Verbindungskanal und die unterhalb der horizontalen Mittelebene liegenden Zylinderbohrungen des Zylinderblocks über untere Öffnungen im Schwenkgehäuse mit einem unteren Verbindungskanal verbindbar, wobei die oberen Verbindungskanäle mit ersten Hochdruckkanälen und die unteren Verbindungskanäle mit zweiten Hochdruckkanälen im Hochdruckblock in Verbindung stehen, und die ersten und die zweiten Hochdruckkanäle mittels im Hochdruckblock untergebrachter Ventile wahlweise miteinander verbindbar sind.

Besonders kompakt und funktionssicher ist das Leistungsverzweigungsgetriebe, wenn die ersten und zweiten Hochdruckkanäle im Hochdruckblock gusstechnisch hergestellt sind, und wenn die Ventile als hydraulisch betätigbare Ventile ausgebildet und in Bohrungen untergebracht sind, welche quer zu den Hochdruckkanälen in den Hochdruckblock eingebracht sind. Die hydraulisch betätigbaren Ventile werden insbesondere paarweise über erste elektromagnetische Ventile angesteuert.

Gute Notfahreigenschaften ergeben sich, wenn den ersten elektromagnetischen Ventilen aus Redundanzgründen jeweils ein zweites elektromagnetisches Ventil parallelgeschaltet oder eine elektromagnetische Ersatzspule zugeordnet ist.

An den Schwenkgehäusen der hydrostatischen Axialkolbenmaschinen ist vorzugsweise in einem vorgegebenen radialen Abstand vom oberen Lagerzapfen jeweils ein Schwenkbolzen angeordnet, und auf dem Gehäuseoberteil sind Hydraulikzylinder vorgesehen, welche zum Verschwenken der Schwenkgehäuse an den Schwenkbolzen angreifen. Die Hydraulikzylinder werden über dritte elektromagnetische Ventile angesteuert, und den dritten elektromagnetischen Ventilen ist aus Redundanzgründen jeweils eine elektromagnetische Ersatzspule zugeordnet.

Die Kupplungen werden über elektromagnetische Ventile angesteuert, die elektromagnetischen Ventile sind in am Gehäuse angeflanschten Ventilplatten untergebracht, und die hydraulische Verbindung zwischen den elektromagnetischen Ventilen und den Kupplungen erfolgt über im Gehäuse verlaufende Kanäle, wobei eine der Kupplungen für die Kopplung der zweiten hydrostatischen Axialkolbenmaschine mit der Ausgangswelle vorgesehen ist, und dem dieser Kupplung zugeordneten elektromagnetischen Ventil aus Redundanzgründen ein weiteres elektromagnetisches Ventil parallelgeschaltet ist.

Eine bevorzugte Ausgestaltung des erfindungsgemässen Verfahrens zeichnet sich dadurch aus, dass das Stufenplanetengetriebe an einem Planetensteg drehbar gelagerte Doppelplanetenräder mit einem kleineren Zahnrad und einem grösseren Zahnrad umfasst, welche mit einem grösseren Sonnenrad und einem kleineren Sonnenrad kämmen und mit dem grösseren Zahnrad in einem Hohlrad ablaufen, dass das grössere Sonnenrad mit der Eingangswelle und die Ausgangswelle mit dem Planetensteg gekoppelt ist, dass im ersten Fahrbereich die erste hydrostatische Axialkolbenmaschine über eine erste Kupplung mit dem Hohlrad und die zweite hydrostatische Axialkolbenmaschine über eine zweite Kupplung mit dem Planetensteg gekoppelt ist, und die erste hydrostatische Axialkolbenmaschine als Pumpe und die zweite hydrostatische Axialkolbenmaschine als Motor betrieben wird, und dass im zweiten Fahrbereich die erste hydrostatische Axialkolbenmaschine über die erste Kupplung mit dem Hohlrad und die zweite hydrostatische Axialkolbenmaschine über eine dritte Kupplung mit dem kleineren Sonnenrad gekoppelt ist, und die erste hydrostatische Axialkolbenmaschine als Motor und die zweite hydrostatische Axialkolbenmaschine als Pumpe betrieben wird.

Insbesondere durchläuft zum Durchlaufen des ersten Fahrbereichs die erste hydrostatische Axialkolbenmaschine, ausgehend vom Schwenkwinkel 0°, den gesamten Schwenkwinkelbereich bis zum maximalen Schwenkwinkel, und die zweite hydrostatische Axialkolbenmaschine, ausgehend vom maximalen Schwenkwinkel, den gesamten Schwenkwinkelbereich bis zum Schwenkwinkel 0°, und durchläuft zum Durchlaufen des zweiten Fahrbereichs die erste hydrostatische Axialkolbenmaschine, ausgehend vom maximalen Schwenkwinkel, den gesamten Schwenkwinkelbereich bis zum Schwenkwinkel 0°, und die zweite hydrostatische Axialkolbenmaschine, ausgehend vom Schwenkwinkel 0°, den gesamten Schwenkwinkelbereich bis zum maximalen Schwenkwinkel.

Besonders günstig ist es, wenn die erste hydrostatische Axialkolbenmaschine über eine vierte Kupplung mit der Eingangswelle koppelbar ist, und wenn zur temporären Zugkrafterhöhung die erste hydrostatische Axialkolbenmaschine gleichzeitig über die erste Kupplung mit dem Hohlrad und über die vierte Kupplung mit der Eingangswelle gekoppelt wird.

Bevorzugt sind die Kupplungen als hydraulisch betätigte Lamellenkupplungen ausgebildet, und werden die Kupplungen bei ihrer Betätigung mit einem Schaltdruck beaufschlagt werden, der von dem in der hydraulischen Verbindung zwischen den hydrostatischen Axialkolbenmaschinen herrschenden Hochdruck abhängt.

Wenn die Verstellung der Winkel der hydrostatischen Axialkolbenmaschinen, die hydraulische Verbindung zwischen den beiden hydrostatischen Axialkolbenmaschinen und die Ansteuerung der Kupplungen über elektromagnetische Ventile erfolgt, und Ersatzmittel für die elektromagnetischen Ventile vorgesehen sind, welche beim Ausfall eines oder mehrerer der elektromagnetischen Ventile zur Aufrechterhaltung wesentlicher Funktionen des Leistungsverzweigungsgetriebes einsetzbar sind, lässt sich ein Notfahrprogramm dadurch realisieren, dass beim Ausfall eines oder mehrerer der elektromagnetischen Ventile die zugehörigen Ersatzmittel eingesetzt werden, wobei insbesondere als Ersatzmittel zusätzliche parallelgeschaltete elektromagnetische Ventile und/oder Ersatzspulen für die elektromagnetischen Ventile eingesetzt werden.

### KURZE ERLÄUTERUNG DER FIGUREN .

Die Erfindung soll nachfolgend anhand von Ausführungsbeispielen im Zusammenhang mit der Zeichnung näher erläutert werden. Es zeigen
- Fig. 1: das Getriebeschema eines Leistungsverteilungsgetriebes für einen Traktor gemäss einem bevorzugten Ausführungsbeispiel der Erfindung;
- Fig. 2: in einer Explosionsdarstellung die Ausführungsform eines Leistungsverteilungsgetriebes gemäss dem Getriebeschema der Fig. 1;
- Fig. 3: einen Längsschnitt durch die Anordnung des Stufenplanetengetriebes und der beiden damit zusammenwirkenden, parallel liegenden hydrostatischen Axialkolbenmaschinen aus Fig. 2 entlang einer durch die drei Achsen gehenden Ebene:
- Fig. 4: einen Längsschnitt durch eine der beiden hydrostatischen Axialkolbenmaschinen mit aufgesetzter Doppelkupplung aus Fig. 2;
- Fig. 5: eine Frontalansicht (Fig. 5a) und eine "durchsichtige" Seitenansicht (Fig. 5b) des Schwenkgehäuses mit den innenliegenden Kanälen der Axialkolbenmaschine aus Fig. 4;
- Fig. 6: in einer "durchsichtigen" Darstellung das Innere des Hochdruckblocks zur ventilgesteuerten hydraulischen Verbindung der beiden Axialkolbenmaschinen aus Fig. 2 in der Seitenansicht (Fig. 6a) und in der Draufsicht von oben (Fig. 6b) bei einer ersten Ventilstellung;
- Fig. 7: in einer "durchsichtigen" Darstellung das Innere des Hochdruckblocks zur ventilgesteuerten hydraulischen Verbindung der beiden Axialkolbenmaschinen aus Fig. 2 in der Seitenansicht (Fig. 6a) und in der Draufsicht von oben (Fig. 6b) bei einer ersten Ventilstellung;
- Fig. 8: eine modellhafte dreidimensionale Darstellung des Leistungsverzweigungsgetriebes aus Fig. 2, wobei der Schwenkwinkel der beiden Axialkolbenmaschinen und der Schaltzustand der beiden Doppelkupplungen sichtbar gemacht ist;
- Fig. 9: mit der Darstellungsart aus Fig. 8 die Steuerung der Kupplungen und des Schwenkwinkels der Axialkolbenmaschinen in den zwei Vorwärtsfahrstufen (Fig. 9(a1)-(a3) bzw. Fig. 9(b1)-(b3)) und der einen Rückwärtsstufe (Fig. 9c);
- Fig. 10: ein Diagramm des Wirkungsgrads und des prozentualen Anteils der hydraulischen Leistung an der übertragenen Leistung in Abhängigkeit von der Geschwindigkeit bei den zwei Vorwärtsfahrstufen des Getriebes nach Fig. 1 bzw. 2; und
- Fig. 11: das vereinfachte Hydraulikschema für das Leistungsverzweigungsgetriebe nach Fig. 2.

### WEGE ZUR AUSFÜHRUNG DER ERFINDUNG

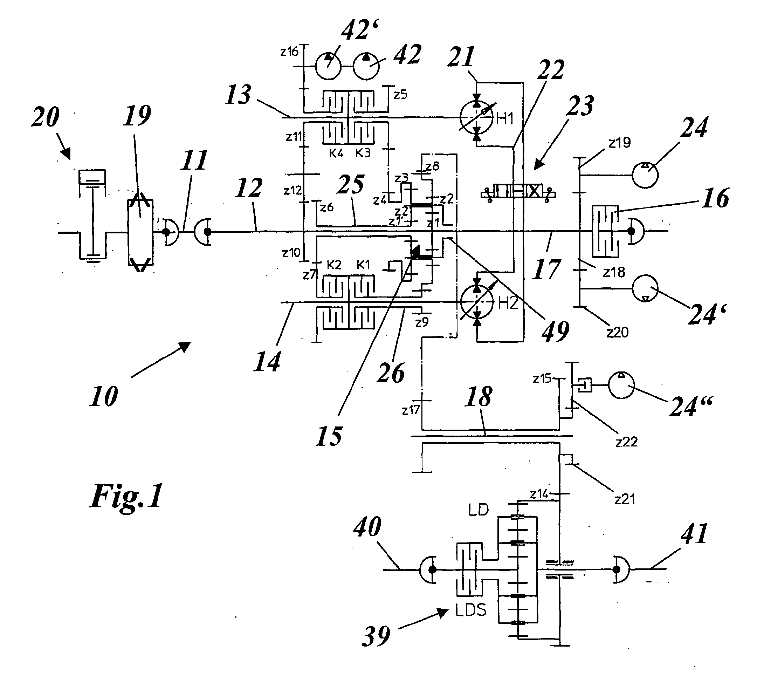

In Fig. 1 ist das Getriebeschema eines Leistungsverzweigungsgetriebes für einen Traktor gemäss einem bevorzugten Ausführungsbeispiel der Erfindung dargestellt. Das Leistungsverzweigungsgetriebe 10 überträgt die Leistung eines Verbrennungsmotors 20, der in Fig. 1 durch einen auf einer Kurbelwelle sitzenden Kolben symbolisiert ist. Das Leistungsverzweigungsgetriebe 10 ist mit einer Eingangswelle (Antriebswelle) 12 über eine Gelenkwelle 11 und einen Torsionsdämpfer 19 mit dem Verbrennungsmotor 20 verbunden. Es gibt die übertragene Leistung über eine Ausgangswelle (Abtriebswelle) 18 und ein Achsverteilergetriebe 39 mit einem Längsdifferential LD und einer Längsdifferentialsperre LDS an eine Achsverbindung 40 zur Vorderachse und eine Achsverbindung 41 zur Hinterachse ab. Die Kopplung zwischen der Ausgangswelle 18 und dem Achsverteilergetriebe 39 erfolgt über zwei miteinander kämmende Zahnräder z14 und z15.

Durch das Leistungsverzweigungsgetriebe 10 hindurch erstreckt sich eine Zapfwelle 17, die eine direkte Fortsetzung der Eingangswelle 12 ist. Die Zapfwelle 17 treibt über Zahnräder z18, z19 und z20 eine erste Pumpe 24 für die Arbeitshydraulik und eine zweite Pumpe 24' für die Lenkung an. Über eine Kupplung 16 kann von aussen Leistung von der Zapfwelle 17 abgenommen werden. Eine dritte Pumpe 24" für die Notlenkung wird über Zahnräder z21, z22 von der Ausgangswelle 18 angetrieben. Weitere Pumpen sind die Speisepumpe 42 und die Schmierölpumpe 42', die auf einer gemeinsamen Achse sitzend über das Vorgelege aus Zahnrädern z16, z11, z12 und z10 von der Eingangswelle 12 angetrieben werden.

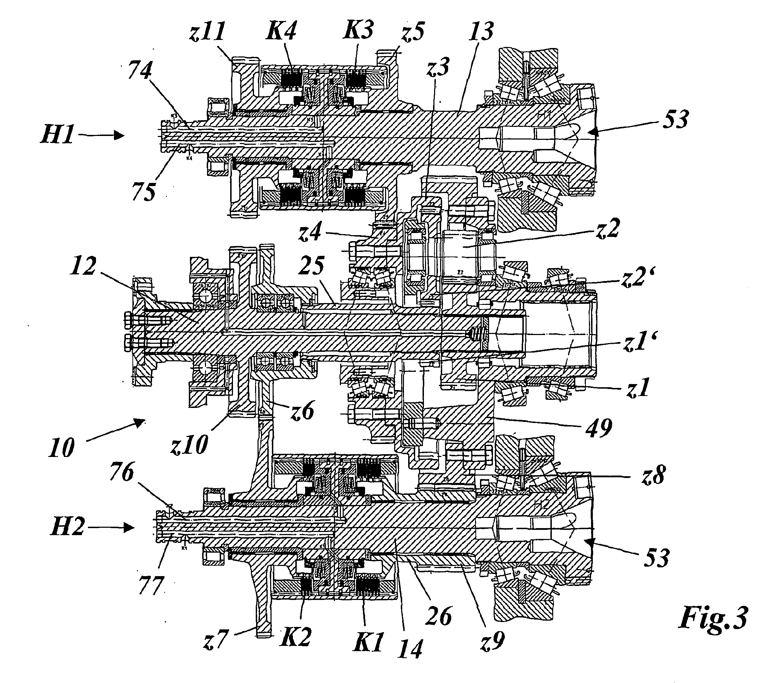

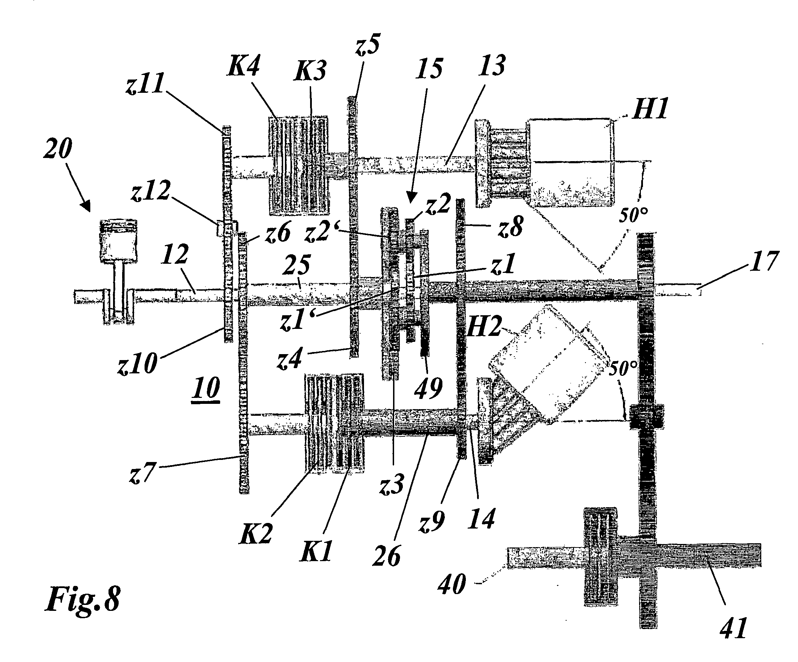

Den Kern des Leistungsverzweigungsgetriebes 10 bilden ein Stufenplanetengetriebe 15 mit einem grossen Sonnenrad z1 und einem kleinen Sonnenrad z1', den Doppelplanetenrädern z2, z2', dem Hohlrad z3 und dem mit einem Zahnrad z8 drehfest verbundenen Planetensteg 49 (siehe auch Fig. 3 und 8), und zwei hydrostatische Axialkolbenmaschinen H1 und H2, deren Abtriebswellen 13 bzw. 14 jeweils über eine Paar von Kupplungen K3, K4 bzw. K1, K2 auf unterschiedliche Weise mit der Eingangswelle 12, der Ausgangswelle 18 und dem Stufenplanetengetriebe 15 gekoppelt werden können. Die hydrostatischen Axialkolbenmaschinen H1 und H2, die wahlweise als Pumpe und Motor arbeiten, sind hydraulisch über Hochdruckleitungen 21, 22 miteinander verbunden, die mittels eines Mehrwegeventils 23 über Kreuz geschaltet werden können. Die erste Axialkolbenmaschine H1 kann mit ihrer Abtriebswelle 13 mittels der Kupplung K3 über ein Vorgelege aus dem Zahnrad z5 und einem mit dem Hohlrad z3 drehfest verbundenen Zahnrad z4 mit dem Hohlrad z3 gekoppelt werden. Sie kann aber auch mittels der Kupplung K4 über das Zahnrad z11, das Zwischenrad z12 und das auf der Eingangswelle 12 drehfest angeordnete Zahnrad z10 mit der Eingangswelle 12 gekoppelt werden. Die zweite Axialkolbenmaschine H2 kann mit ihrer Abtriebswelle 14 einerseits mittels der Kupplung K1 über die Hohlwelle 26 und das darauf drehfest angeordnete Zahnrad z9, welches mit dem Zahnrad z8 kämmt, mit dem Planetensteg 49 und damit mit der Ausgangswelle 18 gekoppelt werden. Sie kann andererseits mittels der Kupplung K2 über das Zahnradpaar z7, z6 und die Hohlwelle 25 mit dem kleineren Sonnenrad z1' des Stufenplanetengetriebes 15 gekoppelt werden.

Die an der Eingangswelle 12 anstehende Leistung wird im Leistungsverzweigungsgetriebe 10 durch das Stufenplanetengetriebe 15 auf zwei Leistungszweige, nämlich einen mechanischen Leistungszweig und einen hydraulischen Leistungszweig aufgeteilt und später an der Ausgangswelle 18 wieder zusammengeführt. Der mechanische Leistungszweig läuft von der Eingangswelle 12 über das mit der Eingangswelle 12 drehfest verbundene grössere Sonnenrad z1, die Doppelplanetenräder z2, den Planetensteg 49 und das Zahnrad z8. Der hydraulische Leistungszweig läuft über die beiden hydraulisch verbundenen Axialkolbenmaschinen H1 und H2 und ist je nach Schaltung der Kupplungen K1,..,K4 unterschiedlich ausgebildet.

Zur Erläuterung der Funktionsweise des Leistungsverzweigungsgetriebes 10 aus Fig. 1. ist dieses in Fig. 8 noch einmal modellhaft in einer dreidimensionalen Darstellung wiedergegeben. Die Ausgangsseite zwischen dem Zahnrad z8 und den Achsverbindungen 40, 41 ist dabei gegenüber Fig. 1 vereinfacht dargestellt. Dasselbe gilt für die Eingangsseite zwischen dem Verbrennungsmotor 20 und der Eingangswelle 12. Die Kupplungen K1,..,K4 sind (wie in Fig. 1) als Lamellenkupplungen ausgebildet, die hydrostatischen Axialkolbenmaschinen H1, H2 sind vom Schrägachsentyp, bei dem der Zylinderblock mit den darin befindlichen Kolben aus der Achse der Abtriebswellen 13, 14 heraus zu einer Seite um einen Schwenkwinkel verschenkt werden kann, dessen Maximalwert wenigstens 45°, vorzugsweise 50° und mehr, beträgt (sog. "Weitwinkelhydrostaten"). Mit dem Leistungsverzweigungsgetriebe 10 aus Fig. 8 und den Weitwinkelhydrostaten H1, H2 lässt sich ein Betrieb realisieren, bei dem die Vorwärtsfahrt gesamthaft durch nur zwei Fahrbereiche bzw. Fahrstufen abgedeckt werden kann, an deren oberem Ende jeweils der hydrostatische Anteil an der übertragenen Leistung gegen Null geht.

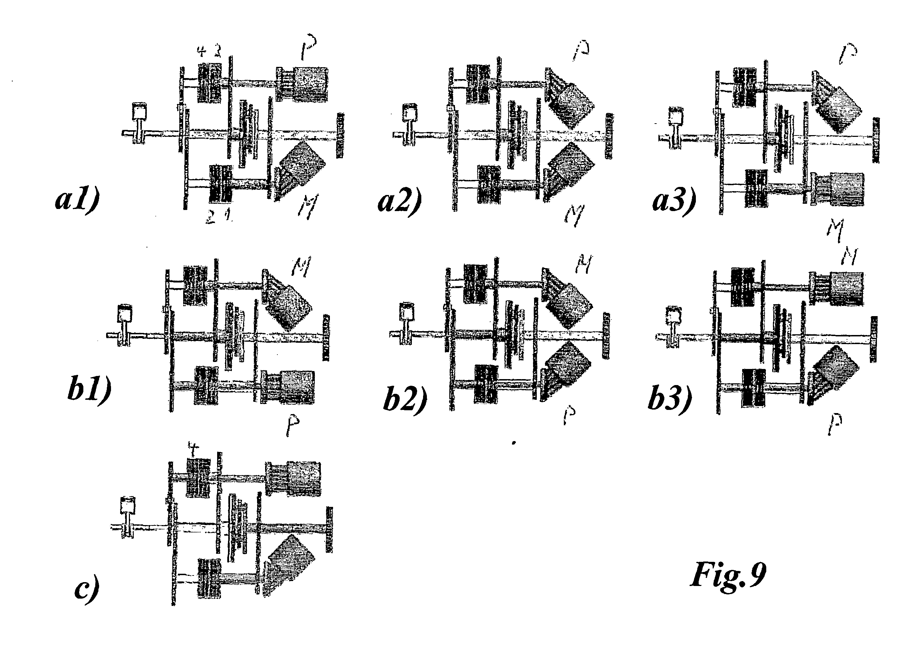

Die Schaltung der Kupplungen K1,..,K4 und die Schwenkstellung der Hydrostaten H1, H2 für die verschiedenen Betriebszustände des Getriebes sind in Fig. 9 dargestellt, wobei die Fig. 9(a1) bis 9(a3) die erste Vorwärtsfahrstufe, die Fig. 9(b1) bis 9(b3) die zweite Vorwärtsfahrstufe, und Fig. 9(c) die Rückwärtsfahrt zeigen. Beim Anfahren (Fig. 9(a1)) sind - wie in der gesamten ersten Vorwärtsfahrstufe - die Kupplungen K3 und K1 betätigt, so dass der erste Hydrostat H1 mit dem Hohlrad z3 des Stufenplanetengetriebes 15, und der zweite Hydrostat H2 mit dem Planetensteg bzw. dem Zahnrad z8 bzw. der Ausgangswelle 18 verkoppelt ist (die Abtriebsseite der betätigten Kupplung ist in Fig. 9 jeweils dunkel eingefärbt). Der erste Hydrostat H1, der in der ersten Vorwärtsfahrstufe als Pumpe arbeitet, ist zunächst unverschwenkt (Schwenkwinkel 0°), während der als Motor arbeitende zweite Hydrostat H2 voll ausgeschwenkt ist (max. Schwenkwinkel). Aufgrund der Nullstellung des ersten Hydrostaten H1 wird kein Druckmedium zum zweiten Hydrostaten H2 gepumpt und damit auch keine Leistung hydraulisch übertragen. Der Anfahrvorgang wird dadurch eingeleitet, dass der erste Hydrostat H1 nach und nach verschwenkt wird, wobei zunehmend Volumen zum zweiten Hydrostaten H2 gepumpt wird und der zweite Hydrostat mit hohem Drehmoment und zunehmender Geschwindigkeit zu drehen beginnt. Ist der erste Hydrostat H1 voll ausgeschwenkt (Fig. 9(a2), ist die erste Phase der ersten Fahrstufe abgeschlossen. In der zweiten Phase wird bei voll ausgeschwenktem ersten Hydrostaten H1 der zweite Hydrostat H2 nach und nach vom maximalen Schwenkwinkel auf den Schwenkwinkel 0° zurückgefahren (Fig. 9(a3)), wobei die Drehzahl bei abnehmendem Drehmoment immer weiter erhöht wird. Am Ende der ersten Fahrstufe nimmt der zweite Hydrostat H2 kein Drehmoment mehr auf und die Drehzahl des ersten Hydrostaten H1 geht gegen Null. Die hydrostatisch übertragene Leistung geht gegen Null, die gesamte Leistung wird mechanisch übertragen.

Zum Übergang von der ersten Fahrstufe in die zweite Fahrstufe (Fig. 9(a3) -> Fig. 9(b1)) wird die Kupplung K1 geöffnet und die Kupplung K2 geschlossen. Da der zweite Hydrostat H2 beim Schwenkwinkel 0° kein Drehmoment aufnimmt, erfolgt die Umschaltung praktisch ohne Schaltmoment. Der zweite Hydrostat H2 ist nun mit dem kleineren Sonnenrad z1' des Stufenplanetengetriebes 15 verkoppelt. Mit dem Umschalten der Kupplungen K1 und K2 wird auch das Mehrwegeventil 23 (Fig. 1) umgeschaltet, so dass die hydraulischen Verbindungen zwischen den beiden Hydrostaten H1 und H2 vertauscht werden. In der zweiten Fahrstufe arbeitet der erste Hydrostat H1 als Motor und der zweite Hydrostat H2 als Pumpe. Wie in der ersten Fahrstufe wird der als Pumpe arbeitende Hydrostat (jetzt der zweite Hydrostat H2) in einer ersten Phase vom Schwenkwinkel 0° ausgehend nach und nach auf den maximalen Schwenkwinkel ausgeschwenkt (Fig. 9(b2)), während der als Motor arbeitende Hydrostat (jetzt der erste Hydrostat H1) voll ausgeschwenkt bleibt. In einer anschliessenden zweiten Phase (Fig. 9(b2) -> Fig. 9(b3)) wird dann der erste Hydrostat H1 in die Nullstellung zurückgeschwenkt. Am Ende der zweiten Fahrstufe geht die hydraulisch übertragene Leistung wiederum gegen Null; die gesamte Leistung wird über den mechanischen Leistungszweig übertragen.

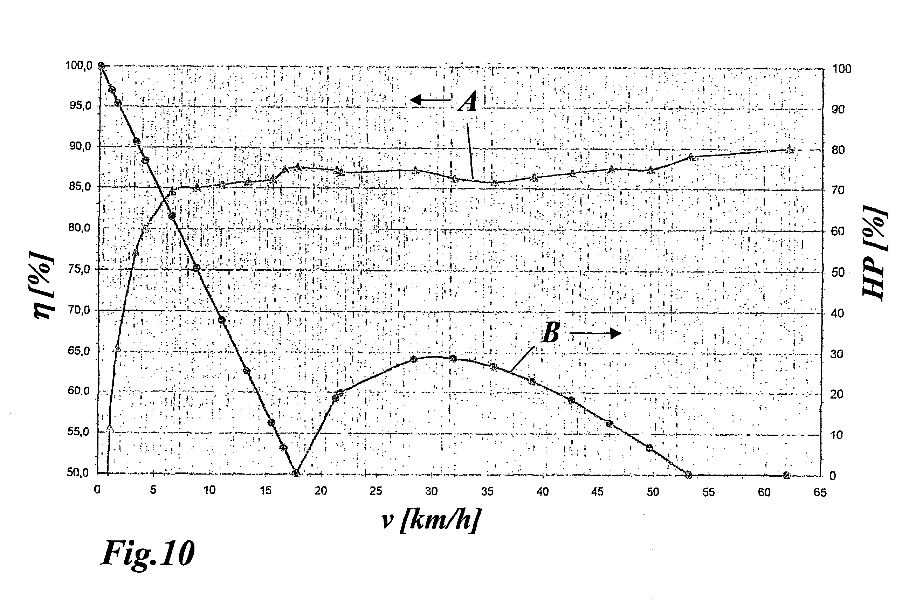

Das sich für ein Leistungsverzweigungsgetriebe gemäss Fig. 1 bzw. Fig. 8 in einem Traktor ergebende Diagramm des Wirkungsgrades 11 in % und des prozentualen Anteils der hydrostatisch übertragenen Leistung HP in Abhängigkeit von der Fahrzeuggeschwindigkeit v ist in Fig. 10 wiedergegeben. Kurve A zeigt den Verlauf des Wirkungsgrades η, Kurve B den Verlauf des Anteils der hydrostatisch übertragenen Leistung. Aufgrund der im Getriebe eingesetzten Weitwinkelhydrostaten kann der gesamte, von 0 bis 63 km/h reichende Fahrbereich in nur zwei Fahrstufen unterteilt werden, wobei die erste Fahrstufe von 0 bis etwa 18 km/h und die zweite Fahrstufe von etwa 18 km/h bis 63 km/h reicht. In der ersten Fahrstufe geht der Anteil der hydrostatisch übertragenen Leistung von anfänglichen 100% linear auf 0 herunter. In der zweiten Fahrstufe steigt der Anteil der hydrostatisch übertragenen Leistung von 0 auf ein Maximum von fast 30% (bei etwa 30 km/h) und sinkt dann (bei etwa 53 km/h) auf 0 und verharrt dort bis zum oberen Ende der Fahrstufe. Dies hat zur Folge, dass der Wirkungsgrad zum Ende der zweiten Fahrstufe nicht wieder absinkt, sondern eher noch zunimmt. Damit ergibt sich für hohe Fahrgeschwindigkeiten, die beim Fahren über Land über einen längeren Zeitraum gehalten werden, ein besonders guter Wirkungsgrad des Getriebes, der zu deutlich abgesenkten Betriebskosten führt.

Bei der Rückwärtsfahrt (Fig. 9(c)) wird - ausgehend von der Situation aus Fig. 9(a1) - von der Kupplung K3 auf die Kupplung K4 umgeschaltet. Desgleichen wird das Mehrwegeventil 23 in der hydraulischen Verbindung zwischen den Hydrostaten H1 und H2 umgeschaltet. Der als Pumpe arbeitende erste Hydrostat wird nun direkt von der Eingangswelle 12 angetrieben und von 0° ausgehend nach und nach ausgeschwenkt. Der vollausgeschwenkte zweite Hydrostat H2 nimmt dann bei hohem Drehmoment Drehzahl auf.

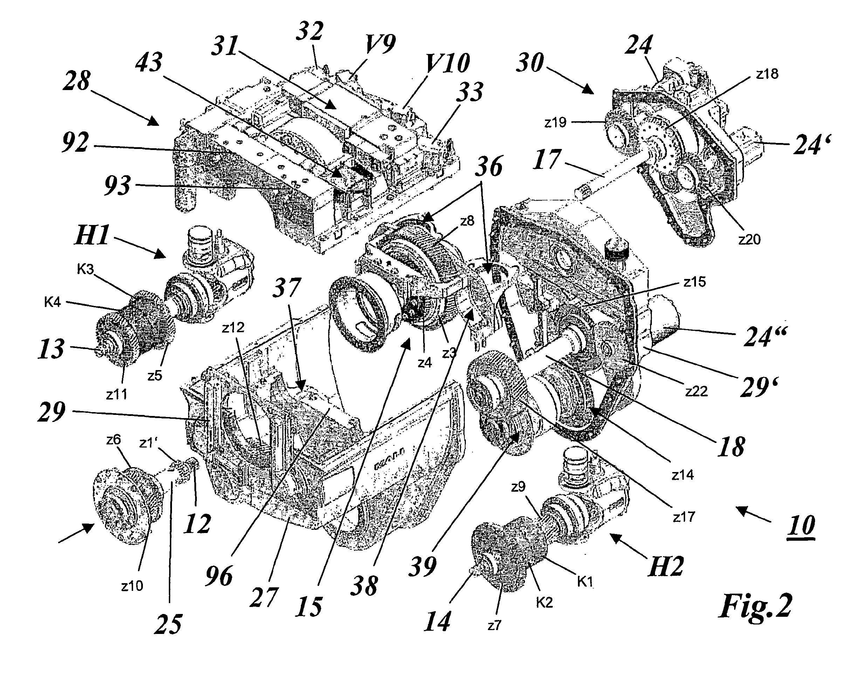

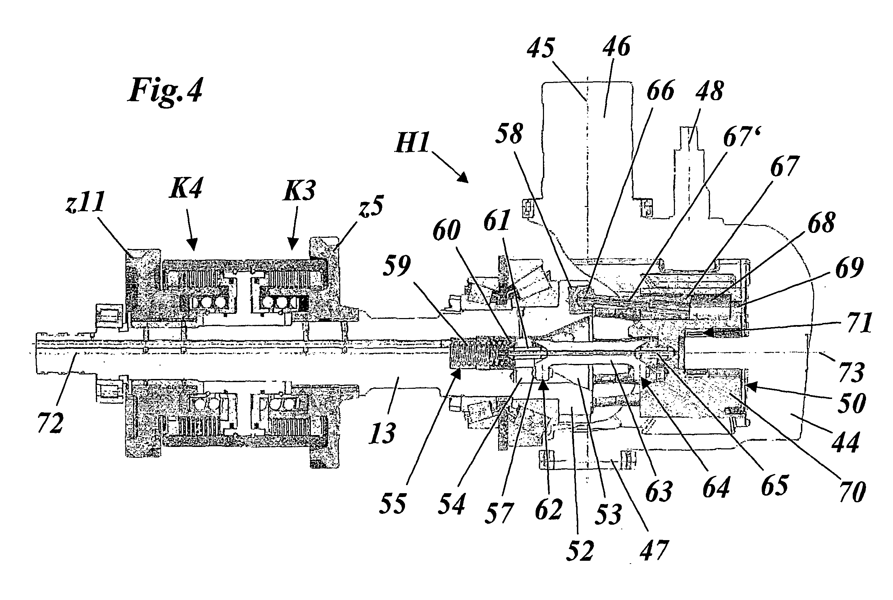

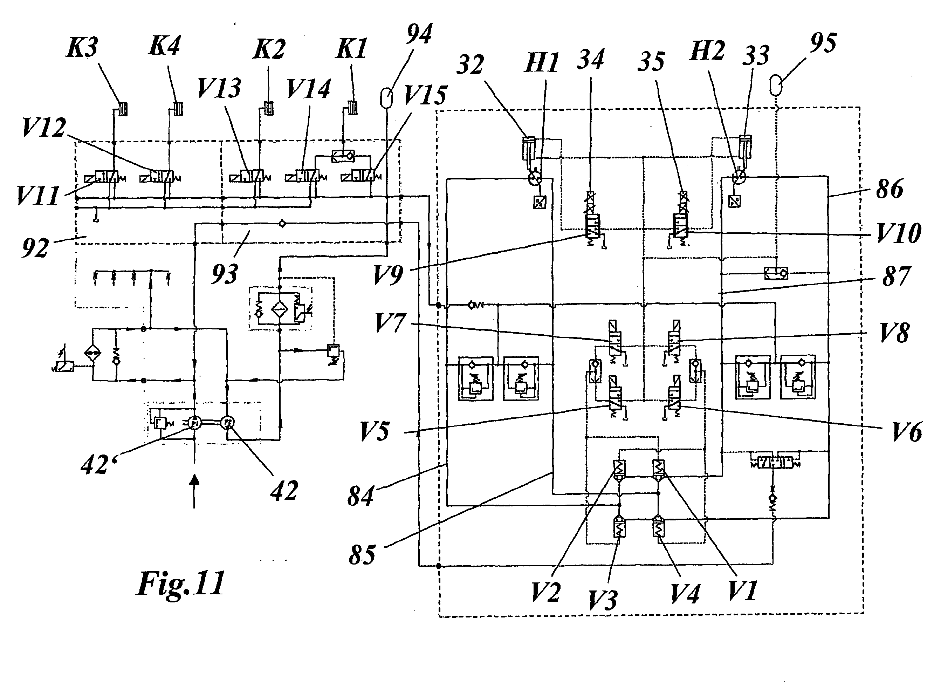

Ein gemäss dem Getriebeschema aus Fig. 1 realisiertes Leistungsverzweigungsgetriebe ist in Fig. 2 in einer Explosionsdarstellung wiedergegeben. Das Leistungsverzweigungsgetriebe 10 ist in einem mehrteiligen Gehäuse untergebracht, das aus einem wannenförmigen Gehäuseunterteil 27, einem flachen Gehäuseoberteil 28, einem vorderen Gehäusedeckel 29 und einem hinteren Gehäusedeckel 29' zusammengesetzt ist. Im untersten Teil des Gehäuses ist das Achsverteilergetriebe 39 angeordnet, dass nach vorne und nach hinten heraus einen Abtrieb für die Vorderachse bzw. Hinterachse aufweist. Direkt oberhalb des Achsverteüergetriebes 39 ist achsenparallel das Stufenplanetengetriebe 15 mittels einer oberen Lagerbrücke 38 an den Seitenwänden des Gehäuseunterteils 27 befestigt. Am hinteren Teil der oberen Lagerbrücke 38 sind zwei kreisrunde obere Lageröffnungen 36 zur Aufnahme der oberen Lagerzapfen (46 in Fig. 4) der Schwenkgehäuse (44 in Fig. 4) der Hydrostaten H1 und H2 vorgesehen. Entsprechende untere Lageröffnungen 37 zur Aufnahme der unteren Lagerzapfen (47 in Fig. 4) der Hydrostaten H1 und H2 sind an einer unteren Lagerbrücke 96 angeordnet, die gleichzeitig der Lagerung der beiden Hydrostaten H1 und H2 dient. Die Hydrostaten H1 und H2 sind achsenparallel zum Achsverteilergetriebe 39 auf beiden Seiten unterhalb des Stufenplanetengetriebes 15 platziert. Sie ragen mit den vorderen Enden ihrer Abtriebswellen 13 bzw. 14 durch die Vorderwand des Gehäuseunterteils 27 und sind dort mittels des mit entsprechenden Anschlussvorrichtungen ausgestatteten vorderen Gehäusedeckels 29 an eine im Gehäuseoberteil 28 befindliche hydraulische Steuerung angeschlossen. Die zwei Ventilplatten 92, 93 mit elektromagnetischen Ventilen (V11,..,V15 in Fig. 11) umfassende hydraulische Steuerung steuert über die in den Abtriebswellen 13, 14 verlaufenden Hydraulikkanäle 74,..,77 (Fig. 3) die auf den Abtriebswellen 13, 14 sitzenden Kupplungen K1,..,K4 an.

Der hintere Gehäusedeckel 29' enthält die Pumpe 24" für die Notlenkung, die von der Ausgangswelle 18 angetrieben wird. Aussen am hinteren Gehäusedeckel 29' ist eine Antriebseinheit angeflanscht, welche die Zapfwelle 17 und die beiden Pumpen 24 und 24' für die Arbeitshydraulik bzw. die Lenkung umfasst.

Das Gehäuseoberteil 28 enthält neben der hydraulischen Steuerung für die Kupplungen K1,..,K4 weitere Steuerungs- und Verbindungselemente 31,..,33 und V9, V10 für die Hydrostaten H1 und H2. Die Funktion und Ausgestaltung dieser Steuerungs- und Verbindungselemente richtet sich nach dem inneren Aufbau der verwendeten Hydrostaten H1, H2. Dieser innere Aufbau ist am Beispiel des Hydrostaten H1 in Fig. 4 dargestellt. Der Hydrostat H1 ist ein Schrägachsenhydrostat mit einer um eine feste Achse 72 drehenden Abtriebswelle 13 und einem um eine verschwenkbare Achse 73 drehenden Zylinderblock 70, der in einem Schwenkgehäuse 44 gelagert ist. Das Schwenkgehäuse 44 mit dem Zylinderblock 70 kann mittels eines Schwenkbolzens 48 um die Schwenkachse 45 geschwenkt werden.

Die hydrostatische Axialkolbenmaschine bzw. der Hydrostat H1 der Fig. 4 umfasst eine längliche Abtriebswelle 13, den Zylinderblock 70, eine Mehrzahl von Kolben 67 sowie eine Synchronisierwelle 63 zur Synchronisierung der Drehungen von Abtriebswelle 13 und Zylinderblock 70. Am einen Ende, welches dem Zylinderblock 70 zugewandt ist, verdickt sich die Abtriebswelle 13 und endet in einem zur Achse 72 der Abtriebswelle 13 konzentrischen Flansch 52. In die Stirnseite des Flansches 52 sind auf einem Teilkreis um die Achse 72 gleichmässig verteilt neun kreiszylindrische Lageraufnahmen eingefräst, in welche sphärische Lager 58 zur schwenkbaren Lagerung der Kolben 67 eingesetzt sind.

Im Zentrum des Flansches 52 ist eine trichterförmige Öffnung 53 vorgesehen, die weiter im Inneren der Abtriebswelle 13 in eine zentrale, im Durchmesser abgestufte Bohrung 55 übergeht. Um die Bohrung 55 herum und teilweise mit der Bohrung 55 überlappend sind drei um jeweils 120° verdreht angeordnete, achsenparallele Bohrungen 54 in die Abtriebswelle 13 eingebracht, die Teil eines ersten Tripodengelenks 62 sind. Vergleichbare Bohrungen sind gegenüber im Zylinderblock 70 vorhanden und sind Teil eines zweiten Tripodengelenks 64. Die beiden Tripodengelenke 62 und 64 ermöglichen eine drehfeste Kopplung der Synchronisierwelle 63 mit der Abtriebswelle 13 und dem Zylinderblock 70 bei gleichzeitiger Verschwenkbarkeit des Zylinderblocks 70 relativ zum Flansch 52 bzw. der Abtriebswelle 13. Die Synchronisierwelle 63 ist zu diesem Zweck an den beiden Enden jeweils mit drei um 120° verdreht angeordneten, radial orientierten, zylindrischen Zapfen ausgestattet, welche - im Fall des ersten Tripodengelenks 62 - von der zentralen Bohrung 55 aus durch den seitlich offenen Überlappungsbereich in die benachbarten Bohrungen 54 hineinreichen. Ein vergleichbarer Eingriff der Zapfen erfolgt auch im zweiten Tripodengelenk 64. Zur Verringerung des Spiels sind auf die Zapfen jeweils Ringe 57 aufgezogen, die an der Aussenseite bombiert sind.

Wenn der Zylinderblock 70 gegenüber dem Flansch 52 verschwenkt wird, ändert sich der von der Synchronisierwelle 63 zu überbrückende Abstand zwischen dem Zylinderblock 70 und dem Flansch 52. Um diese Abstandsänderung ausgleichen zu können, ist die Synchronisierwelle 63 im Bereich des ersten Tripodengelenks 62 in axialer Richtung verschiebbar gelagert. Die Synchronisierwelle 63 sitzt mit ihrem dem Zylinderblock 70 zugewandten Ende verschwenkbar auf einem ersten Druckstift 65, der in den Zylinderblock 70 eingesetzt ist und mit einem Abschnitt seiner Länge aus dem Zylinderblock 70 herausragt. Damit die Synchronisierwelle 63 im zweiten Tripodengelenk 64 mit dem Zylinderblock nicht ausser Eingriff gerät, wird sie in axialer Richtung mit einer Vorspannung gegen den zweiten Druckstift 61 gedrückt. Zur Erzeugung der Vorspannung dient eine in der Bohrung 55 untergebrachte Druckfeder 59, die über einem axial verschiebbaren Druckkolben 60 und einen zweiten Druckstift 61 auf die Synchronisierwelle 63 drückt. Druckkolben 60, Druckstifte 61, 65 und Synchronisierwelle 63 haben jeweils einen zentralen Ölkanal.

Der (zylindrische) Zylinderblock 70 weist auf einem Teilkreis um seine Achse 73 neun gleichmässig verteilte achsenparallele Zylinderbohrungen 68 auf, die untereinander jeweils einen Winkelabstand von 40° aufweisen. Die Zylinderbohrungen 68 sind von der dem Flansch 52 zugewandten Seite her als Sackbohrungen ausgeführt. In die Zylinderbohrungen 68 tauchen von dieser Seite her die Kolben 67 ein, die im Flansch 52 verschwenkbar gelagert sind. Dazu weist jeder Kolben 67 einen länglichen, sich nach unten verjüngenden Kolbenschaft 67' auf, der am unteren Ende in einen Kugelkopf 66 übergeht, mit dem er im zugehörigen sphärischen Lager 58 verschwenkbar gelagert ist. Der Zylinderblock 70 kann mit dem Schwenkgehäuse 44 um die Schwenkachse 45 verschwenkt werden. Der maximale Schwenkwinkel beträgt wenigstens 45° und ist vorzugsweise grösser gleich 50°.

Werden bei einem konstanten Schwenkwinkel ≠0 die Abtriebswelle 13 und damit über die Synchronisierwelle 63 auch der Zylinderblock 70 um ihre jeweiligen Achsen 72 bzw. 73 gedreht, durchläuft jeder der neun Kolben 67 pro Umdrehung einen vollständigen Hubzyklus. Die hydrodynamische Axialkolbenmaschine H1 kann dabei als hydraulische Pumpe arbeiten, wenn ein Antrieb über die Abtriebswelle 13 erfolgt und ein hydraulisches Medium durch die aus der Zylinderbohrung 68 herausfahrenden Kolben 67 angesaugt und durch die in die Zylinderbohrung 68 hineinfahrenden Kolben herausgedrückt wird. Die Pumpleistung in Volumen pro Umdrehung ist dabei umso grösser, je grösser der Schwenkwinkel α ist. Sie kann aber auch als hydraulischer Motor arbeiten, wenn die Zylinder jeweils mit einem unter Druck stehenden hydraulischen Medium beaufschlagt werden und die entstehende Drehbewegung an der Abtriebswelle 13 abgenommen wird. Das Drehmoment ist dabei umso grösser, je grösser der Schwenkwinkel ist. Sollen dagegen hohe Drehzahlen an der Abtriebswelle 13 erreicht werden, muss der Schwenkwinkel klein gemacht werden.

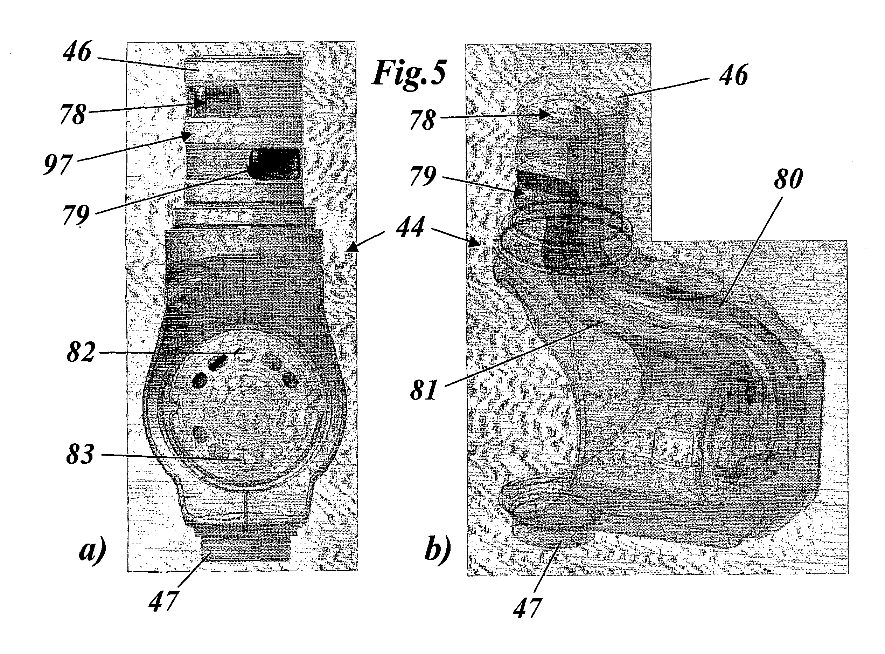

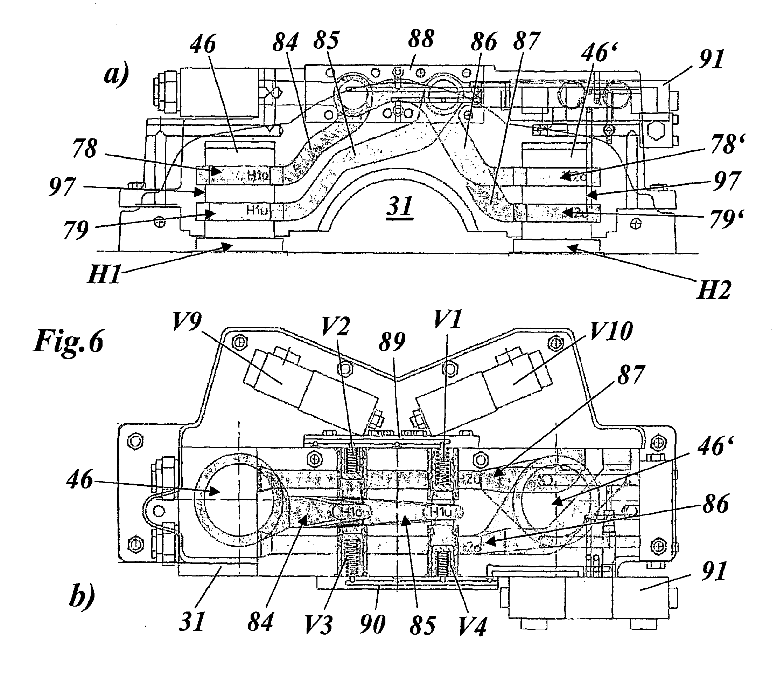

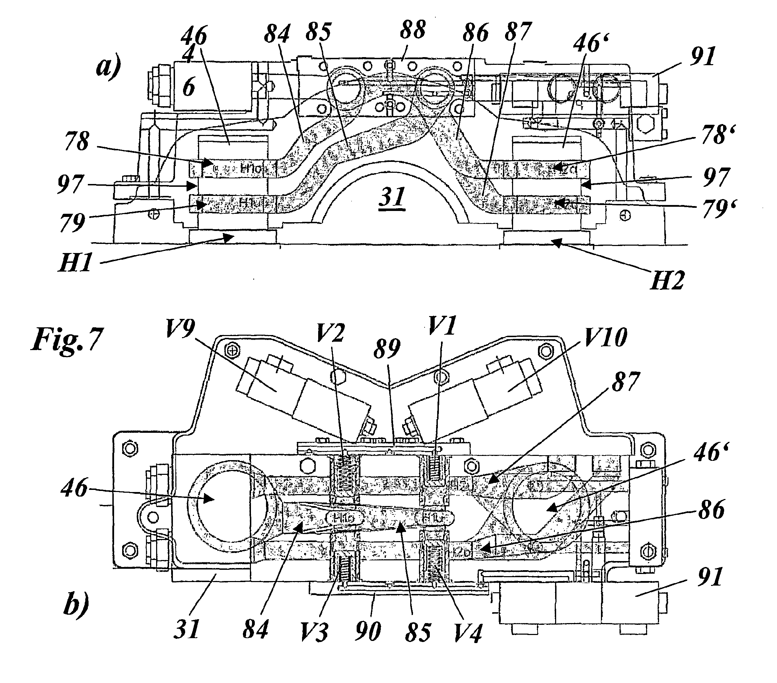

Der von den Kolben 67 begrenzte Arbeitsraum in den Zylinderbohrungen 68 ist durch Anschlussöffnungen 69 von der äusseren Stirnseite des Zylinderblocks 70 her zugänglich. Durch ein Axiallager 50 hindurch sind die Anschlussöffnungen 69 der Zylinderbohrungen 68 je nach Drehstellung des Zylinderblocks 70 nacheinander mit einer Mehrzahl von oberen und unteren Öffnungen 82 bzw. 83 im angrenzenden Schwenkgehäuse verbunden (Fig. 5(a)). Die oberen und unteren Öffnungen 82 bzw. 83 im Schwenkgehäuse 44 stehen mit einem oberen und unteren Verbindungskanal 80 bzw. 81 in Verbindung (Fig. 5(b)). Die gusstechnisch hergestellten Verbindungskanäle 80, 81 verlaufen im Schwenkgehäuse 44 von den oberen und unteren Öffnungen 82, 83 ausgehend nach oben in den oberen Lagerzapfen 46, wo sie in übereinander angeordneten, durch zylindrische Dichtflächen 97 getrennten Anschlussöffnungen 78, 79 enden. Über die Anschlussöffnungen 78, 79 bzw. 78', 79' in den oberen Lagerzapfen 46 bzw. 46' der beiden Hydrostaten H1 und H2 kann gemäss Fig. 6 und 7 die hydraulische Verbindung zwischen den beiden Hydrostaten H1, H2 hergestellt werden.

Zur Herstellung (und Steuerung) der hydraulischen Verbindung zwischen den Hydrostaten H1 und H2 dient ein auf dem Gehäuseoberteil 28 angeordneter Hochdruckblock 31 (Fig. 2, 6 und 7). Gemäss Fig. 6(a) und 7(a) ragen die beiden Hydrostaten H1, H2 mit ihren oberen Lagerzapfen 46, 46' in entsprechende Bohrungen im Hochdruckblock 31 hinein. Innerhalb des Hochdruckblocks 31 sind Hochdruckkanäle 84,..,87 gusstechnisch ausgebildet, die im Bereich der oberen Lagerzapfen 46, 46' in zwei übereinander liegenden Ringkammern enden, die gegeneinander an den Dichtflächen 97 abgedichtet sind und mit den Anschlussöffnungen 78, 78' und 79, 79' der oberen Lagerzapfen 46, 46' in Verbindung stehen. Die Hochdruckkanäle 84,..,87 führen von den oberen Lagerzapfen 46, 46' zu einem in der Mitte des Hochdruckblocks 31 angeordneten Ventilblock 88, wo sie mittels vier hydraulisch betätigbaren Ventilen V1,..,V4 wahlweise miteinander verbindbar sind. Die Ventile V1,..,V4 sind in quer verlaufenden Bohrungen untergebracht, in denen jeweils ein Kolben mit Federdruck gegen eine Dichtfläche gedrückt wird. Die Ventile V1,..,V4 öffnen gegen den Federdruck, wenn die Hochdruckkanäle 84,..,87 mit Hochdruck beaufschlagt sind. Sie können mittels eines Gegendrucks geschlossen werden, mit dem die Kolben der Ventile V1;..,V4 von hinten über seitlich angeflanschte Ansteuerplatten 89, 90 beaufschlagt werden. Die Steuerung des Gegendrucks erfolgt durch ein elektromagnetisches Steuerventil 91.

Die Ventile V1,..,V4 im Ventilblock 88 werden paarweise angesteuert. In der Darstellung der Fig. 6 sind die Ventile V1 und V4 geöffnet, die Ventile V2 und V3 dagegen geschlossen. In diesem Fall ist die obere Anschlussöffnung 78 des ersten Hydrostaten H1 (H1o) über die Hochdruckkanäle 84 und 87 und das Ventil V1 mit der unteren Anschlussöffnung 79' des zweiten Hydrostaten (H2u) verbunden. Ebenso ist die untere Anschlussöffnung 79 des ersten Hydrostaten H1 (H1u) über die Hochdruckkanäle 85 und 86 und das Ventil V4 mit der oberen Anschlussöffnung 78' des zweiten Hydrostaten H2 (H2o) verbunden. Diese in Fig. 6 dargestellte Ventilschaltung (V1, V4 offen, V2, V3 geschlossen) ist für die erste Fahrstufe des Getriebes vorgesehen, in welcher der erste Hydrostat H1 als Pumpe und der zweite Hydrostat H2 als Motor arbeitet. In der zweiten Fahrstufe sind gemäss Fig. 7 die Verhältnisse umgekehrt: Die Ventile V1 und V4 sind geschlossen, die Ventile V2 und V3 dagegen geöffnet. In diesem Fall sind jeweils die beiden unteren Anschlussöffnungen 79 und 79' und die beiden oberen Anschlussöffnungen 78 und 78' miteinander verbunden.

Von den Hochdruckkanälen 86, 87 sind im Hochdruckblock 31 Zuleitungen nach aussen geführt, um über Druckaufnehmer die in den Kanälen herrschenden Drücke messen und überwachen zu können. Andere Zuleitungen ermöglichen die Zufuhr von Hydraulikmedium in den zwischen den Hydrostaten H1, H2 bestehenden Kreislauf. Hinter dem Hochdruckblock 31 sind auf dem Gehäuseoberteil 28 zwei schräg stehende Hydraulikzylinder 32, 33 angeordnet, die durch elektromagnetische Ventile V9 und V10 angesteuert werden und die an an den in das Gehäuseoberteil 28 hineinragenden Schwenkbolzen 48 (Fig. 4), die mit radialem Abstand von der Schwenkachse 45 am Schwenkgehäuse 44 der Hydrostaten H1, H2 angeordnet sind, angreifen:

Das sich ergebende Hydraulikschema für das Leistungsverzweigungsgetriebe 10 aus Fig. 1-7 ist in vereinfachter Form in Fig. 11 wiedergegeben. Von einer Schmierölpumpe 42' und einer nachgeschalteten Speisepumpe 42 wird der notwendige Schmieröl- bzw. Speisedruck erzeugt. Der Speisedruck steht an einem ersten Druckspeicher 94 zur Verfügung. Er wird zur Betätigung der Kupplungen K1,..,K4 verwendet, wobei die Steuerung über die in den Ventilplatten 92, 93 untergebrachten Ventile V11,..,V15 erfolgt, die als elektromagnetische Mehrwegeventile ausgebildet sind. Die Kupplung K1 kann aus Redundanzgründen durch zwei gleichwertige Ventile V14 und V15 betätigt werden, die durch ein Wechselventil zusammengeschaltet sind. Der Druckspeicher 94 für den Speisedruck ist über Rückschlagventile mit antiparallel geschalteten Druckbegrenzern mit den Hochdruckkanälen 84,..,87 im Hochdruckblock 31 verbunden, die in der bereits beschriebenen Weise mittels der Ventile V1,..,V4 zusammengeschaltet werden können. Die Ventile V1,..,V4 werden paarweise über elektromagnetische Ventile V5 und V6 angesteuert, denen mittels Wechselventilen weitere Ventile V7 und V8 als redundante Ersatzventile parallelgeschaltet sind.

Ein zweiter Druckspeicher 95 ist über ein Wechselventil an die beiden Druckkanäle 86 und 87 angeschlossen. Aus diesem Druckspeicher 95 wird der Druck für die Betätigung der Ventile V1,..,V4 entnommen. Mit demselben Druck werden auch die beiden Hydraulikzylinder 32, 33 für die Verschwenkung der Hydrostaten H1 und H2 betätigt. Zur Steuerung der Hydraulikzylinder 32, 33 werden die elektromagnetischen Ventile V9 und V10 (Fig. 6, 7) eingesetzt, die aus Redundanzgründen zusätzliche Ersatzspulen 34, 35 haben.

Die gesamte Steuerung und Überwachung des Getriebes in Abhängigkeit von den Motordaten und den Anforderungen an Drehmoment und Fahrgeschwindigkeit sowie die Umschaltung auf ein Notfahrprogramm bei Ausfall bestimmter Steuerungselemente wird durch eine elektronische Getriebesteuerungseinheit 43 (Fig. 2) übernommen, die in unmittelbarer Nähe der Messwertaufnehmer (für Druck, Drehzahl und Ventilstellung usw.) und Steuerventile auf dem Gehäuseoberteil 28 platziert ist. Durch die Integration der Steuer- und Überwachungsfunktionen des Getriebes einschliesslich der schaltbaren Hochdruckkanäle 84,..,87 für die hydraulische Verbindung der Hydrostaten H1, H2 in das Gehäuseoberteil 28 ergibt sich ein sehr kompakter Getriebeaufbau mit gleichzeitig hoher Funktionssicherheit. Durch die eingebaute Redundanz lässt sich bei Ausfall bestimmter Steuerungselemente ein Notfahrprogramm realisieren, dass in den meisten Fällen eine Weiterfahrt ohne Einschränkung ermöglicht, in anderen Fällen zumindest ein eingeschränktes Fahren nach Hause oder in die nächste Werkstatt sicherstellt. Wenn beispielsweise die Hauptspulen der Ventile V9 und/oder V10 zur Steuerung der Hydraulikzylinder 32 und 33 ausfallen, kann durch Einsatz der Ersatzspulen 34 und/oder 35 (oder durch den Einsatz kompletter Ersatzventile) eine Weiterfahrt ohne Einschränkungen sichergestellt werden. Dasselbe gilt auch für den Fall, dass das Ventil V14 zur Ansteuerung der Kupplung K1 ausfällt, weil dann das Ersatzventil V15 dessen Rolle übernehmen kann. Fällt die Ansteuerung für die Kupplung K2 aus, kann immer noch in der ersten Fahrstufe (und rückwärts) gefahren werden. Fällt die Ansteuerung der Kupplung K3 aus, kann durch Einschalten der Kupplung K4 und gleichzeitiges Umschalten der Ventile V1,..,V4 ein eingeschränktes Vorwärtsfahren ohne die zweite Fahrstufe (und ein uneingeschränktes Rückwärtsfahren) verwirklicht werden. Fällt die Ansteuerung der Kupplung K4 aus, ist die Vorwärtsfahrt nicht eingeschränkt. Eine eingeschränkte Rückwärtsfahrt wird dann durch Ansteuern der Kupplung K3 erreicht. Fällt eines der Ventile V5 und V6 für die Hochdruckkanalumschaltung aus, kann durch Einsatz des entsprechenden Ersatzventils V7 oder V8 die volle Fahrtüchtigkeit wiederhergestellt werden.

Schliesslich ist es aufgrund der besonderen Konfiguration des Leistungsverzweigungsgetriebes 10 im Rahmen der Getriebesteuerung denkbar, durch gleichzeitiges Schliessen der Kupplungen K3 und K4 eine temporäre Zugkrafterhöhung zu erreichen, weil hierdurch eine zusätzliche mechanische Kraftübertragung wirksam wird.

### BEZUGSZEICHENLISTE

- 10: Leistungsverzweigungsgetriebe
- 11: Gelenkwelle
- 12: Eingangswelle
- 13,14: Abtriebswelle (Axialkolbenmaschine)
- 15: Stufenplanetengetriebe
- 16: Kupplung
- 17: Zapfwelle
- 18: Ausgangswelle
- 19: Torsionsdämpfer
- 20: Verbrennungsmotor
- 21,22: Hochdruckleitung
- 23: Mehrwegeventil
- 24,24',24": Pumpe
- 25,26: Hohlwelle
- 27: Gehäuseunterteil
- 28: Gehäuseoberteil
- 29: Gehäusedeckel (vorn)
- 29': Gehäusedeckel (hinten)
- 30: Antriebseinheit
- 31: Hochdruckblock
- 32,33: Hydraulikzylinder
- 34,35: Ersatzspute
- 36: Lageröffnung (oben)
- 37: Lageröffnung (unten)
- 38: Lagerbrücke (oben)
- 39: Achsverteilergetriebe
- 40: Achsverbindung (Vorderachse)
- 41: Achsverbindung (Hinterachse)
- 42: Speisepumpe
- 42': Schmierölpumpe
- 43: Getriebesteuerungseinheit
- 44: Schwenkgehäuse
- 45: Schwenkachse
- 46,46': oberer Lagerzapfen
- 47: unterer Lagerzapfen
- 48: Schwenkbolzen
- 49: Planetensteg
- 50: Axiallager
- 51: Abtriebswelle
- 52: Flansch
- 53: Öffnung (trichterförmig)
- 54: Bohrung (Tripodengelenk)
- 55: Bohrung (Druckvorrichtung)
- 56: Axialkanal
- 57: Ring
- 58: sphärisches Lager
- 59: Druckfeder
- 60: Druckkolben
- 61,65: Druckstift
- 62,64: Tripodengelenk
- 63: Synchronisierwelle
- 66: Kugelkopf
- 67: Kolben
- 67': Kolbenschaft
- 68: Zylinderbohrung
- 69: Anschlussöffnung (Zylinderbohrung)
- 70: Zylinderblock
- 71: Lager
- 72: Achse (Abtriebswelle)
- 73: Achse (Zylinderblock)
- 74,..,77: Hydraulikkanal
- 78,78': obere Anschlussöffnung
- 79,79': untere Anschlussöffnung
- 80: oberer Verbindungskanal
- 81: unterer Verbindungskanal
- 82: obere Öffnung
- 83: untere Öffnung
- 84,86: Hochdruckkanal
- 85,87: Hochdruckkanal
- 88: Ventilblock
- 89,90: Ansteuerplatte
- 91: Steuerventil
- 92,93: Ventilplatte
- 94,95: Druckspeicher
- 96: Lagerbrücke (unten)
- 97: Dichtfläche
- H1,H2: hydrostatische Axialkolbenmaschine ("Hydrostat")
- K1,..,K4: Kupplung
- LD: Längsdifferential
- LDS: Längsdifferentialsperre
- V1,..,V4: Ventil (hydraulisch betätigbar)
- V5,..,V15: Ventil (elektromagnetisch)
- z4,...,z22: Zahnrad
- z1,z1': Sonnenrad
- z2,z2': Doppelplanetenräder
- z3: Hohlrad

## Patentansprüche

1. Leistungsverzweigungsgetriebe (10), insbesondere für landwirtschaftliche Fahrzeuge wie Traktoren oder dgl., bei welchem Leistungsverzweigungsgetriebe (10) zwischen einer Eingangswelle (12) und einer Ausgangswelle (18) ein Stufenplanetengetriebe (15) zur Aufteilung der an der Eingangswelle (12) anstehenden Leistung auf einen mechanischen Leistungszweig und einen hydraulischen Leistungszweig vorgesehen ist, und der hydraulische Leistungszweig durch zwei hydraulisch miteinander in Verbindung stehende, gleichartige hydrostatische Axialkolbenmaschinen (H1, H2) gebildet wird, welche wahlweise als Pumpe oder Motor betreibbar und in einem vorgegebenen Schwenkwinkelbereich verschwenkbar sind, und welche zur Abdeckung unterschiedlicher Fahrbereiche bzw. Fahrstufen jeweils über zwei Kupplungen (K1, K2 bzw. K3, K4) auf unterschiedliche Weise mit der Eingangswelle (12) bzw. dem Stufenplanetengetriebe (15) verbindbar sind, **dadurch gekennzeichnet, dass** die beiden hydrostatischen Axialkolbenmaschinen (H1, H2) als Weitwinkelhydrostaten mit einem Schwenkwinkelbereich von wenigstens 45° ausgebildet sind.

2. Leistungsverzweigungsgetriebe nach Anspruch 1, **dadurch gekennzeichnet, dass** die beiden hydrostatischen Axialkolbenmaschinen (H1, H2) einen Schwenkwinkelbereich von wenigstens 50° aufweisen.

3. Leistungsverzweigungsgetriebe nach Anspruch 1 oder 2, **dadurch gekennzeichnet, dass** das Stufenplanetengetriebe (15) an einem Planetensteg (49) drehbar gelagerte Doppelplanetenräder (z2, z2') mit einem kleineren Zahnrad (z2) und einem grösseren Zahnrad (z2') umfasst, welche mit einem grösseren Sonnenrad (z1) und einem kleineren Sonnenrad (z1') kämmen und mit dem grösseren Zahnrad (z2') in einem Hohlrad (z3) ablaufen, dass das grössere Sonnenrad (z1) mit der Eingangswelle (12) gekoppelt ist, dass die erste hydrostatische Axialkolbenmaschine (H1) über eine erste Kupplung (K3) mit dem Hohlrad (z3) und über eine zweite Kupplung (K4) mit der Eingangswelle (12) koppelbar ist, dass die zweite hydrostatische Axialkolbenmaschinen (H2) über eine dritte Kupplung (K1) mit dem Planetensteg (49) und über eine vierte Kupplung (K2) mit dem kleineren Sonnenrad (z1') koppelbar ist, und dass die Ausgangswelle (18) mit dem Planetensteg (49) gekoppelt ist.

4. Leistungsverzweigungsgetriebe nach Anspruch 3, **dadurch gekennzeichnet, dass** das grössere Sonnenrad (z1) drehfest auf der Eingangswelle (12) sitzt, dass an den Planetensteg (49) ein erstes Stirnrad (z8) angeflanscht ist, und dass auf der Ausgangswelle (18) ein zweites Stirnrad (z17) drehfest angeordnet ist, welches mit dem ersten Stirnrad (z8) kämmt.

5. Leistungsverzweigungsgetriebe nach Anspruch 4, **dadurch gekennzeichnet, dass** am Hohlrad (z3) ein drittes Stirnrad (z4) angeflanscht ist und die Kopplung der ersten hydrostatischen Axialkolbenmaschine (H1) mittels der ersten Kupplung (K3) über ein viertes Stirnrad (z5) erfolgt, welches mit dem dritten Stirnrad (z4) kämmt, dass auf der Eingangswelle (12) ein fünftes Stirnrad (z10) drehfest angeordnet ist und die Kopplung der ersten hydrostatischen Axialkolbenmaschine (H1) mittels der zweiten Kupplung (K4) über ein sechstes Stirnrad (z11) und ein Umkehrrad (z12) erfolgt, welches mit dem fünften Stirnrad (z10) und dem sechsten Stirnrad (z11) kämmt, dass die Kopplung der zweiten hydrostatischen Axialkolbenmaschine (H2) mittels der dritten Kupplung (K1) über ein siebtes Stirnrad (z9) erfolgt, welches mit dem ersten Stirnrad (z8) kämmt, und dass das kleinere Sonnenrad (z1') über eine die Eingangswelle (12) umgebende Hohlwelle (25) mit einem achten Stirnrad (z6) drehfest verbunden ist und die Kopplung der zweiten hydrostatischen Axialkolbenmaschine (H2) mittels der vierten Kupplung (K2) über ein neuntes Stirnrad (z7) erfolgt, welches mit dem achten Stirnrad (z6) kämmt.

6. Leistungsverzweigungsgetriebe nach Anspruch 5, **dadurch gekennzeichnet, dass** die Eingangswelle (12) drehfest mit einer koaxialen Zapfwelle (17) verbunden ist, welche durch das Leistungsverzweigungsgetriebe (10) hindurchgeht.

7. Leistungsverzweigungsgetriebe nach einem der Ansprüche 1 bis 6, **dadurch gekennzeichnet, dass** die hydrostatischen Axialkolbenmaschinen (H1, H2) jeweils mit einer Abtriebswelle (13, 14) ausgestattet sind, dass die Kupplungen (K1, K2 bzw. K3, K4) als hydraulisch betätigbare Lamellenkupplungen ausgebildet und auf den Abtriebswellen (13, 14) angeordnet sind, und dass die Kupplungen (K1,..,K4) über in den Abtriebswellen (13, 14) verlaufende, axiale Hydraulikkanäle (74,..,77) betätigt werden.

8. Leistungsverzweigungsgetriebe nach einem der Ansprüche 1 bis 7, **dadurch gekennzeichnet, dass** die Eingangswelle (12), das Stufenplanetengetriebe (15), die beiden hydrostatischen Axialkolbenmaschinen (H1, H2) und die Ausgangswelle (18) in einem gemeinsamen Gehäuse (27, 28, 29, 29') untergebracht sind.

9. Leistungsverzweigungsgetriebe nach Anspruch 8, **dadurch gekennzeichnet, dass** die beiden hydrostatischen Axialkolbenmaschinen (H1, H2) über im Gehäuse (27, 28, 29, 29') verlaufende Hochdruckkanäle (84,..,87) hydraulisch miteinander verbindbar sind.

10. Leistungsverzweigungsgetriebe nach Anspruch 9, **dadurch gekennzeichnet, dass** das Gehäuse (27, 28, 29, 29') ein Gehäuseunterteil (27) und ein Gehäuseoberteil (28) umfasst, dass am Gehäuseoberteil (28) ein Hochdruckblock (31) angeordnet ist, in welchem die Hochdruckkanäle (84,..,87) untergebracht sind, dass die beiden hydrostatischen Axialkolbenmaschinen (H1, H2) jeweils einen Zylinderblock (70) mit einer Mehrzahl von Zylinderbohrungen (68) und darin verschiebbar gelagerten Kolben (67) umfassen, welcher Zylinderblock (70) um eine horizontale Achse (73) drehbar in einem Schwenkgehäuse (44) gelagert ist, dass die Schwenkgehäuse (44) jeweils mit einem oberen Lagerzapfen (46, 46') im Hochdruckblock (31) um eine vertikale Schwenkachse (45) verschwenkbar gelagert sind, und dass die Zylinderbohrungen (68) über im Schwenkgehäuse (44) bis in die oberen Lagerzapfen (46, 46') hinein verlaufende Verbindungskanäle (80, 81) mit den Hochdruckkanälen (84,..,87) im Hochdruckblock (31) verbunden sind.

11. Leistungsverzweigüngsgetriebe nach Anspruch 10, **dadurch gekennzeichnet, dass** bei jeder der beiden hydrostatischen Axialkolbenmaschinen (H1, H2) die oberhalb einer horizontalen Mittelebene liegenden Zylinderbohrungen (68) des Zylinderblocks (70) über obere Öffnungen (82) im Schwenkgehäuse (44) mit einem oberen Verbindungskanal (80) und die unterhalb der horizontalen Mittelebene liegenden Zylinderbohrungen (68) des Zylinderblocks (70) über untere Öffnungen (83) im Schwenkgehäuse (44) mit einem unteren Verbindungskanal (81) verbindbar sind, dass die oberen Verbindungskanäle (80) mit ersten Hochdruckkanälen (84, 86) und die unteren Verbindungskanäle (81) mit zweiten Hochdruckkanälen (85, 87) im Hochdruckblock (31) in Verbindung stehen, und dass die ersten und die zweiten Hochdruckkanäle (84, 86 bzw. 85, 87) mittels im Hochdruckblock (31) untergebrachter Ventile (V1,..,V4) wahlweise miteinander verbindbar sind.

12. Leistungsverzweigungsgetriebe nach Anspruch 11, **dadurch gekennzeichnet, dass** die ersten und zweiten Hochdruckkanäle (84, 86 bzw. 85, 87) im Hochdruckblock (31) gusstechnisch hergestellt sind, und dass die Ventile (V1,..,V4) als hydraulisch betätigbare Ventile ausgebildet und in Bohrungen untergebracht sind, welche quer zu den Hochdruckkanälen (84,..,87) in den Hochdruckblock (31) eingebracht sind.

13. Leistungsverzweigungsgetriebe nach Anspruch 12, **dadurch gekennzeichnet, dass** die hydraulisch betätigbaren Ventile (V1,..,V4) paarweise über erste elektromagnetische Ventile (V5, V6) angesteuert werden.

14. Leistungsverzweigungsgetriebe nach Anspruch 13, **dadurch gekennzeichnet, dass** den ersten elektromagnetischen Ventilen (V5, V6) aus Redundanzgründen jeweils ein zweites elektromagnetisches Ventil (V7, V8) parallelgeschaltet oder eine elektromagnetische Ersatzspule zugeordnet ist.

15. Leistungsverzweigungsgetriebe nach einem der Ansprüche 10 bis 14, **dadurch gekennzeichnet, dass** an den Schwenkgehäusen (44) der hydrostatischen Axialkolbenmaschinen (H1, H2) in einem vorgegebenen radialen Abstand vom oberen Lagerzapfen (46, 46') jeweils ein Schwenkbolzen (48) angeordnet ist, und dass auf dem Gehäuseoberteil (28) Hydraulikzylinder (32, 33) vorgesehen sind, welche zum Verschwenken der Schwenkgehäuse (44) an den Schwenkbolzen (48) angreifen.

16. Leistungsverzweigungsgetriebe nach Anspruch 15, **dadurch gekennzeichnet, dass** die Hydraulikzylinder (32, 33) über dritte elektromagnetische Ventile (V9, V10) angesteuert werden, und dass den dritten elektromagnetischen Ventilen (V9, V10) aus Redundanzgründen jeweils eine elektromagnetische Ersatzspule (94, 95) zugeordnet ist.

17. Leistungsverzweigungsgetriebe nach Anspruch 7 und 8, **dadurch gekennzeichnet, dass** die Kupplungen (K1,..,K4) über elektromagnetische Ventile (V11,..,V15) angesteuert werden, dass die elektromagnetischen Ventile (V11,..,V15) in am Gehäuse (27, 28, 29, 29') angeflanschten Ventilplatten (91, 93) untergebracht sind, und dass die hydraulische Verbindung zwischen den elektromagnetischen Ventilen (V11,..,V15) und den Kupplungen (K1,..,K4) über im Gehäuse (27, 28, 29, 29') verlaufende Kanäle erfolgt.

18. Leistungsverzweigungsgetriebe nach Anspruch 17, **dadurch gekennzeichnet, dass** eine der Kupplungen (K1) für die Kopplung der zweiten hydrostatischen Axialkolbenmaschine (H2) mit der Ausgangswelle (18) vorgesehen ist, und dass dem dieser Kupplung (K1) zugeordneten elektromagnetischen Ventil (V14) aus Redundanzgründen ein weiteres elektromagnetisches Ventil (V15) parallelgeschaltet ist.

19. Verfahren zum Betrieb eines Leistungsverzweigungsgetriebes nach Anspruch 1, **dadurch gekennzeichnet, dass** die Verstellung der Winkel der hydrostatischen Axialkolbenmaschinen (H1, H2), die hydraulische Verbindung zwischen den beiden hydrostatischen Axialkolbenmaschinen (H1, H2) und die Ansteuerung der Kupplungen (K1,..,K4) derart erfolgt, dass die Vorwärtsfahrt in zwei aufeinanderfolgende Fahrbereiche unterteilt wird, und dass der Anteil der über den hydraulischen Zweig übertragenen Leistung am Ende jedes der beiden Fahrbereiche jeweils gegen Null geht.

20. Verfahren nach Anspruch 19, **dadurch gekennzeichnet, dass** das Stufenplanetengetriebe (15) an einem Planetensteg (49) drehbar gelagerte Doppelplanetenräder (z2, z2') mit einem kleineren Zahnrad (z2) und einem grösseren Zahnrad (z2') umfasst, welche mit einem grösseren Sonnenrad (z1) und einem kleineren Sonnenrad (z1') kämmen und mit dem grösseren Zahnrad (z2') in einem Hohlrad (z3) ablaufen, dass das grössere Sonnenrad (z1) mit der Eingangswelle (12) und die Ausgangswelle (18) mit dem Planetensteg (49) gekoppelt ist, dass im ersten Fahrbereich die erste hydrostatische Axialkolbenmaschine (H1) über eine erste Kupplung (K3) mit dem Hohlrad (z3) und die zweite hydrostatische Axialkolbenmaschine (H2) über eine zweite Kupplung (K1) mit dem Planetensteg (49) gekoppelt ist, und die erste hydrostatische Axialkolbenmaschine (H1) als Pumpe und die zweite hydrostatische Axialkolbenmaschine (H2) als Motor betrieben wird, und dass im zweiten Fahrbereich die erste hydrostatische Axialkolbenmaschine (H1) über die erste Kupplung (K3) mit dem Hohlrad (z3) und die zweite hydrostatische Axialkolbenmaschine (H2) über eine dritte Kupplung (K2) mit dem kleineren Sonnenrad (z1') gekoppelt ist, und die erste hydrostatische Axialkolbenmaschine (H1) als Motor und die zweite hydrostatische Axialkolbenmaschine (H2) als Pumpe betrieben wird.

21. Verfahren nach Anspruch 20, **dadurch gekennzeichnet, dass** zum Durchlaufen des ersten Fahrbereichs die erste hydrostatische Axialkolbenmaschine (H1), ausgehend vom Schwenkwinkel 0°, den gesamten Schwenkwinkelbereich bis zum maximalen Schwenkwinkel, und die zweite hydrostatische Axialkolbenmaschine (H2), ausgehend vom maximalen Schwenkwinkel, den gesamten Schwenkwinkelbereich bis zum Schwenkwinkel 0° durchläuft, und dass zum Durchlaufen des zweiten Fahrbereichs die erste hydrostatische Axialkolbenmaschine (H1), ausgehend vom maximalen Schwenkwinkel, den gesamten Schwenkwinkelbereich bis zum Schwenkwinkel 0°, und die zweite hydrostatische Axialkolbenmaschine (H2), ausgehend vom Schwenkwinkel 0°, den gesamten Schwenkwinkelbereich bis zum maximalen Schwenkwinkel durchläuft.

22. Verfahren nach Anspruch 20, **dadurch gekennzeichnet, dass** die erste hydrostatische Axialkolbenmaschine (H1) über eine vierte Kupplung (K4) mit der Eingangswelle (12) koppelbar ist, und dass zur temporären Zugkrafterhöhung die erste hydrostatische Axialkolbenmaschine (H1) gleichzeitig über die erste Kupplung (K3) mit dem Hohlrad (z3) und über die vierte Kupplung (K4) mit der Eingangswelle (12) gekoppelt wird.

23. Verfahren nach einem der Ansprüche 19 bis 22, **dadurch gekennzeichnet, dass** die Kupplungen (K1,..,K4) als hydraulisch betätigte Lamellenkupplungen ausgebildet sind, und dass die Kupplungen (K1,..,K4) bei ihrer Betätigung mit einem Schaltdruck beaufschlagt werden, der von dem in der hydraulischen Verbindung zwischen den hydrostatischen Axialkolbenmaschinen (H1, H2) herrschenden Hochdruck abhängt.

24. Verfahren nach einem der Ansprüche 19 bis 23, **dadurch gekennzeichnet, dass** die Verstellung der Winkel der hydrostatischen Axialkolbenmaschinen (H1, H2), die hydraulische Verbindung zwischen den beiden hydrostatischen Axialkolbenmaschinen (H1, H2) und die Ansteuerung der Kupplungen (K1,..,K4) über elektromagnetische Ventile (V5,..,V6, V9,..,V14) erfolgt, dass Ersatzmittel (V7, V8; V15; 34, 35) für die elektromagnetischen Ventile (V5,..,V6, V9,..,V14) vorgesehen sind, welche beim Ausfall eines oder mehrerer der elektromagnetischen Ventile (V5....V6. V9,..,V14) zur Aufrechterhaltung wesentlicher Funktionen des Leistungsverzweigungsgetriebes einsetzbar sind, und dass beim Ausfall eines oder mehrerer der elektromagnetischen Ventile (V5,..,V6, V9,..,V14) die zugehörigen Ersatzmittel (V7, V8; V15; 34, 35) eingesetzt werden.

25. Verfahren nach Anspruch 24, **dadurch gekennzeichnet, dass** als Ersatzmittel zusätzliche parallelgeschaltete elektromagnetische Ventile (V7, V8; V15) und/oder Ersatzspulen (34, 35) für die elektromagnetischen Ventile (V9, V10) eingesetzt werden.

## Claims

1. A power-branched transmission (10), in particular for agricultural vehicles such as tractors or likewise, with which power-branched transmission (10), a stepped planetary gear (15) for dividing the power prevailing at the input shaft (12) onto a mechanical power branch and a hydraulic power branch is provided between an input shaft (12) and an output shaft (18), and the hydraulic power branch is formed by two hydrostatic axial piston machines (H1, H2) of the same type, which are hydraulically in connection with one another and may be selectively operated as a pump or motor and may be swivelled in a defined swivel angle range, and which for covering different travel regions or travel steps, via in each case two clutches (K1, K2 or K3, K4), may be connected in a different manner to the input shaft (12) or to the stepped planetary gear (15), **characterised in that** the two hydrostatic axial piston machines (H1, H2) are designed as wide-angle hydrostats with a swivel angle range of at least 45°.

2. A power-branched transmission according to claim 1, **characterised in that** the two hydrostatic axial piston machines (H1, H2) have a swivel angle range of at least 50°.

3. A power-branched transmission according to claim 1 or 2, **characterised in that** the stepped planetary gear (15) comprises double planet wheels (z2, z2') rotatably mounted on a planet spider (49), with a smaller gearwheel (z2) and a larger gear wheel (z2') which mesh with a larger sun wheel (z1) and a smaller sun wheel (z1'), and with the larger gearwheel (z2') run in a ring gear (z3), that the larger sun wheel (z1) is coupled to the input shaft (12), that the first hydrostatic axial piston machine (H1) may be coupled via a first clutch (K3) to the ring gear (z3) and via a second clutch (K4) to the input shaft (12), that the second hydrostatic axial piston machine (H2) may be coupled via a third clutch (K1) to the planet spider (49), and via a fourth clutch (K2) to the smaller sun wheel (z1'), and that the output shaft (18) is coupled to the planet spider (49).

4. A power-branched transmission according to claim 3, **characterised in that** the larger sun wheel (z1) is seated on the input shaft (12) in a rotationally fixed manner, that a first spur wheel (z8) is flanged onto the planet spider (49), and that a second spur wheel (z17) is arranged in a rotational fixed manner on the output shaft (18) and meshes with the first spur wheel (z8).

5. A power-branched transmission according to claim 4, **characterised in that** a third spur wheel (z4) is flanged on the ring gear (z3), and the coupling of the first hydrostatic axial piston machine (H1) by way of the first clutch (K3) is effected via a fourth spur wheel (z5), which meshes with the third spur wheel (z4), that a fifth spur wheel (z10) is arranged in a rotationally fixed manner on the input shaft (12), and the coupling of the first hydrostatic axial piston machine (H1) is effected by way of the second clutch (K4) via a sixth spur wheel (z11) and a reverse wheel (z12) which meshes with the fifth spur wheel (z10) and the sixth spur wheel (z11), that the coupling of the second hydrostatic axial piston machine (H2) is effected by way of the third clutch (K1) via a seventh spur wheel (z9) which meshes with the first spur wheel (z8), and that the smaller sun wheel (z1') is connected in a rotationally fixed manner to an eighth spur wheel (z6) via a hollow shaft (25) surrounding the input shaft (12), and the coupling of the second hydrostatic axial piston machine (H2) is effected by way of the fourth clutch (K2) via a ninth spur wheel (z7) which meshes with the eight spur wheel (z6).

6. A power-branched transmission according to claim 5, **characterised in that** the input shaft (12) is connected in a rotationally fixed manner to a coaxial power take-off shaft (17) which goes through the power-branched transmission (10).

7. A power-branched transmission according to one of the claims 1 to 6, **characterised in that** the hydrostatic axial piston machines (H1, H2) are provided in each case with a driven shaft (13, 14), that the clutches (K1, K2 or K3, K4) are designed as hydraulically actuatable multiple-disk clutches and arranged on the driven shafts (13, 14), and that the clutches (K1,.., K4) are actuated via axial hydraulic channels (74,..,77) running in the driven shafts (13, 14).

8. A power-branched transmission according to one of the claims 1 to 7, **characterised in that** the input shaft (12), the stepped planetary gear (15), the two hydrostatic axial piston machines (H1, H2) and the output shaft (18) are accommodated in a common housing (27, 28, 29, 29')

9. A power-branched transmission according to claim 8, **characterised in that** the two hydrostatic axial piston machines (H1, H2) are hydraulically connectable to one another via high-pressure channels (84,..,87) running in the housing (27, 28, 29, 29').

10. A power-branched transmission according o claim 9, **characterised in that** the housing (27, 28, 29, 29') comprises a housing lower part (27) and a housing upper part (28), that a high-pressure block (31) is arranged on the housing upper part (28), in which block the high pressure channels (84,..87) are accommodated, that the two hydrostatic axial piston machines (H1, H2) in each case comprise a cylinder block (70) with a plurality of cylinder bores (68) and pistons (67) displaceably mounted therein, said cylinder block (70) being mounted rotatably about a horizontal axis (73) in a swivel housing (44), that the swivel housing (44) in each case with an upper bearing journal (46, 46') in the high-pressure block (31), is pivotably mounted about a vertical swivel axis (45), and that the cylinder bores (68) are connected, via connection channels (80, 81) running in the swivel housing (44) up to into the upper bearing journals (46, 46), to the high-pressure channels (84, ..,87) in the high-pressure block (31).

11. A power-branched transmission according to claim 10, **characterised in that** with each of the two hydrostatic axial piston machines (H1, H2), the cylinder bores (68) of the cylinder block (70) which lie above a horizontal middle plane, may be connected via upper openings (82) in the swivel housing (44) to an upper connection channel (80), and the cylinder bores (68) of the cylinder block (70) which lie below the horizontal middle plane may be connected via lower openings (83) in the swivel housing (44) to a lower connection channel (81), that the upper connection channels (80) are in connection with first high-pressure channels (84, 86), and the lower connection channels (81) are in connection with second high-pressure channels (85, 87), in the high-pressure block (31), and that the first and the second high-pressure channels (84, 86 and 85, 87 respectively) may be selectively connected to one another by way of valves (V1,..,V4) accommodated in the high-pressure block (31).

12. A power-branched transmission according to claim 11, **characterised in that** the first and the second high-pressure channels (84, 86 and 85, 87 respectively) in the high-pressure block (31) are manufactured with casting technology, and that the valves (V1,..,V4) are designed as hydraulically actuatable valves and are accommodated in bores, which are incorporated transversely to the high-pressure channels (84,..87) in the high-pressure block (31).

13. A power-branched transmission according to claim 12, **characterised in that** the hydraulically, actuatable valves (V1,..,V4) are activated in pairs via first electromagnetic valves (V5, V6).

14. A power-branched transmission according to claim 13, **characterised in that** in each case a second electromagnetic valve (V7, V8) is connected in parallel with, or an electromagnet replacement coil is allocated to, the first electromagnetic valves (V5, V6) for reasons of redundancy.

15. A power-branched transmission according to one of the claims 10 to 14, **characterised in that** in each case a swivel bolt (48) is arranged on the swivel housings (44) of the hydrostatic axial piston machines (H1, H2) at a predefined radial distance to the upper bearing journal (46, 46'), and that hydraulic cylinders (32, 33) are provided on the housing upper part (28), which engage on the swivel bolt (48) for swivelling the swivel housing (44).

16. A power-branched transmission according to claim 15, **characterised in that** the hydraulic cylinders (32, 33) are activated via third electromagnetic valves (V9, V10), and that in each case an electromagnetic replacement coil (94, 95) is allocated to the third electromagnetic valves (V9, V10) for redundancy reasons.

17. A power-branched transmission according to claim 7 and 8, **characterised in that** the clutches (K1,.., K4) are activated via electromagnetic valves (V11,..,V15), that the electromagnetic valves (V11,..,V15) are accommodated in valve plates (91, 93) flanged on the housing (27, 28, 29, 29'), and that the hydraulic connection between the electromagnetic valves (V11,..,V15) and the clutches (K1,..,K4) is effected via channels running in the housing (27, 28, 29, 29').

18. A power-branched transmission according to claim 17, **characterised in that** one of the clutches (K1) is provided for coupling the second hydrostatic axial piston machine (H2) to the output shaft (18), and that for redundancy reasons, a further electromagnetic valve (V15) is connected in parallel to the electromagnetic valve (V14) allocated to this clutch (K1).

19. A method for operation of a power-branched transmission according to claim 1, **characterised in that** adjustment of the angle of the hydrostatic axial piston machines (H1, H2), the hydraulic connection between the two hydrostatic axial piston machines (H1, H2), and the activation of the clutches (K1,..,K4) is effected in a manner such that the forwards travel is divided into two consecutive travel regions, and that the share of the power transmitted via the hydraulic branch at the end of each of the two travel regions tends to zero.

20. A method according to claim 19, **characterised in that** the stepped planetary gear (15) comprises double planet wheels (z2, z2') rotatably mounted on a planet spider (49), with a smaller gearwheel (z2) and a larger gearwheel (z2'), which mesh with a larger sun wheel (z1) and a smaller sun wheel (z2'), and which run with the larger sun wheel (z2'), in a ring gear (z3), that the larger sun wheel (z1) is coupled to the input shaft (12), and the output shaft (18) to the planet spider (49), that in the first travel region, the first hydrostatic axial piston machine (H1) is coupled via a first clutch (K3) to the ring gear (z3), and the second hydrostatic axial piston machine (H2) via a second clutch (K1) to the planet spider (49), and the first hydrostatic axial piston machine (H1) is operated as a pump, and the second hydrostatic axial piston machine (H2) is operated as a motor, and that in the second travel region, the first hydrostatic axial piston machine (H1) is coupled via the first clutch (K3) to the ring gear (z3), and the second hydrostatic axial piston machine (H2) via a third clutch (K2) to the smaller sun wheel (z1'), and the first hydrostatic axial piston machine (H1) is operated as a motor, and the second hydrostatic axial piston machine (H2) is operated as a pump.

21. A method according to claim 20, **characterised in that** for running through the first travel region, the first hydrostatic axial piston machine (H1), proceeding from the swivel angle 0°, runs through the complete swivel angle region up to the maximal swivel angle, and the second hydrostatic axial piston machine (H2), proceeding from the maximal swivel angle, runs through the complete swivel angle region up to the swivel angle 0°, and that for running through the second travel region, the first hydrostatic axial piston machine (H1), proceeding from the maximal hydrostatic swivel angle, runs through the complete swivel angle region up to the swivel angle 0°, and the second hydrostatic axial piston machine (H2), proceeding from the swivel angle 0°, runs through the complete swivel angle region up to the maximal swivel angle.

22. A method according to claim 20, **characterised in that** the first hydrostatic axial piston machine (H1) may be coupled via a fourth clutch (K4) to the input shaft (12), and that for temporarily increasing the tensile force, the first hydrostatic axial piston machine (H1) is simultaneously coupled via the first clutch (K3) to the ring gear (z3), and via the fourth clutch (K4) to the input shaft (12).

23. A method according to one of the claims 19 to 22, **characterised in that** the clutches (K1,..,K4) are designed as hydraulically actuated multiple-disk clutches, and that the clutches (K1,..,K4) on actuation are impinged by a switching pressure, which depends on the high pressure prevailing in the hydraulic connection between the hydrostatic axial piston machines (H1, H2).

24. A method according to one of the claims 19 to 23, **characterised in that** the adjustment of the angle of the hydrostatic axial piston machines (H1, H2), the hydraulic connection between the two hydrostatic axial piston machines (H1, H2), and the activation of the clutches (K1,..;K4) is effected via electromagnetic valves (V5,..;V6,V9,..,V14), that replacement means (V7, V8;V15;34,35) for the electromagnetic valves (V5,..,V6, V9,..,V14) are provided, which, given a failure of one or more of the electromagnetic valves (V5,..,V6,V9,..,V14), may be applied for maintaining essential functions of the power-branched transmission, and that the associated replacement means (V7, V8; V15; 34,35) are applied given a failure of one or more of the electromagnetic valves (V5,..,V6,..,V14).

25. A method according to claim 24, **characterised in that** additional electromagnetic valves (V7, V8; V15) which are connected in parallel, and/or replacement coils (34, 35) for the electromagnetic valves (V9, V10), are applied as replacement means.

## Revendications

1. Transmission à répartition de puissance (10), notamment pour des véhicules agricoles tels que des tracteurs ou similaires, pour laquelle transmission à répartition de puissance (10) entre un arbre d'entrée (12) et un arbre de sortie (18) est prévu un engrenage planétaire à niveau (15) pour répartir la puissance présente sur l'arbre d'entrée (12) sur une branche de puissance mécanique et une branche de puissance hydraulique, et la branche de puissance hydraulique est formée par deux machines à pistons axiaux (H1, H2) hydrostatiques semblables, en liaison hydraulique l'une avec l'autre, qui peuvent être exploitées au choix en tant que pompe ou moteur et pivotées dans une zone d'angle de pivotement prescrite, et qui peuvent être reliées différemment pour recouvrir différentes zones ou niveaux de roulement respectivement par le biais de deux couplages (K1, K2 ou K3, K4) à l'arbre d'entrée (12) ou à l'engrenage planétaire à niveau (15), **caractérisée en ce que** les deux machines à pistons axiaux (H1, H2) hydrostatiques sont réalisées comme des machines hydrostatiques à grand angle dotées d'une zone d'angle de pivotement d'au moins 45°.

2. Transmission à répartition de puissance selon la revendication 1, **caractérisée en ce que** les deux machines à pistons axiaux (H1, H2) hydrostatiques présentent une zone d'angle de pivotement d'au moins 50°.

3. Transmission à répartition de puissance selon la revendication 1 ou 2, **caractérisée en ce que** l'engrenage planétaire à niveau (15) comprend des roues planétaires doubles (z2, z2') logées de manière rotative sur une traverse planétaire (49) pourvues d'une plus petite roue dentée (z2) et d'une plus grande roue dentée (z2') qui s'engrènent avec une plus grande roue solaire (z1) et une plus petite roue solaire (z1') et roulent avec la plus grande roue dentée (z2') dans une couronne (z3), **en ce que** la plus grande roue solaire (z1) est couplée à l'arbre d'entrée (12), **en ce que** la première machine à pistons axiaux (H1) hydrostatique peut être couplée par le biais d'un premier couplage (K3) à la couronne (z3) et par le biais d'un deuxième couplage (K4) à l'arbre d'entrée (12), **en ce que** la seconde machine à pistons axiaux (H2) hydrostatique peut être couplée par le biais d'un troisième couplage (K1) à la traverse planétaire (49) et par le biais d'un quatrième couplage (K2) à la plus petite roue solaire (z1'), et **en ce que** l'arbre de sortie (18) est couplé à la traverse planétaire (49).

4. Transmission à répartition de puissance selon la revendication 3, **caractérisée en ce que** la plus grande roue solaire (z1) est logée de manière solidaire en rotation sur l'arbre d'entrée (12), **en ce qu'**une première roue dentée cylindrique (z8) est bridée à la traverse planétaire (49), et **en ce qu'**une deuxième roue dentée cylindrique (z17) est disposée de manière solidaire en rotation sur l'arbre de sortie (18), laquelle s'engrène avec la première roue dentée cylindrique (z8).

5. Transmission à répartition de puissance selon la revendication 4, **caractérisée en ce qu'**une troisième roue dentée cylindrique (z4) est bridée à la couronne (z3) et le couplage de la première machine à pistons axiaux (H1) hydrostatique est effectué au moyen du premier couplage (K3) par le biais d'une quatrième roue dentée cylindrique (z5) qui s'engrène avec la troisième roue dentée cylindrique (z4), **en ce qu'**une cinquième roue dentée cylindrique (z10) est disposée de manière solidaire en rotation sur l'arbre d'entrée (12) et le couplage de la première machine à pistons axiaux (H1) hydrostatique est effectué au moyen du deuxième couplage (K4) par le biais d'une sixième roue dentée cylindrique (z11) et d'un pignon inverseur (z12) qui s'engrène avec la cinquième roue dentée cylindrique (z10) et la sixième roue dentée cylindrique (z11), **en ce que** le couplage de la seconde machine à pistons axiaux (H2) hydrostatique est effectué au moyen du troisième couplage (K1) par le biais d'une septième roue dentée cylindrique (z9) qui s'engrène avec la première roue dentée cylindrique (z8), et **en ce que** la plus petite roue solaire (z1') est reliée de manière solidaire en rotation par le biais d'un arbre creux (25) entourant l'arbre d'entrée (12) à une huitième roue dentée cylindrique (z6) et le couplage de la seconde machine à pistons axiaux (H2) hydrostatique est effectué au moyen du quatrième couplage (K2) par le biais d'une neuvième roue dentée cylindrique (z7) qui s'engrène avec la huitième roue dentée cylindrique (z6).

6. Transmission à répartition de puissance selon la revendication 5, **caractérisée en ce que** l'arbre d'entrée (12) est relié de manière solidaire en rotation à une prise de force (17) coaxiale qui traverse la transmission à répartition de puissance (10).

7. Transmission à répartition de puissance selon l'une quelconque des revendications 1 à 6, **caractérisée en ce que** les machines à pistons axiaux (H1, H2) hydrostatiques sont équipées chacune d'un arbre de sortie (13, 14), **en ce que** les couplages (K1, K2 ou K3, K4) sont réalisés comme des couplages à disques multiples à commande hydraulique et sont disposés sur les arbres de sortie (13, 14), et **en ce que** les couplages (K1, ..., K4) sont actionnés par le biais des canaux hydrauliques (74, ..., 77) axiaux, s'étendant dans les arbres de sortie (13, 14).

8. Transmission à répartition de puissance selon l'une quelconque des revendications 1 à 7, **caractérisée en ce que** l'arbre d'entrée (12), l'engrenage planétaire à niveau (15), les deux machines à pistons axiaux (H1, H2) hydrostatiques et l'arbre de sortie (18) sont placés dans un carter (27, 28, 29, 29') commun.

9. Transmission à répartition de puissance selon la revendication 8, **caractérisée en ce que** les deux machines à pistons axiaux (H1, H2) hydrostatiques peuvent être reliées hydrauliquement par le biais de canaux à haute pression (84, ..., 87) s'étendant dans le carter (27, 28, 29, 29').

10. Transmission à répartition de puissance selon la revendication 9, **caractérisée en ce que** le carter (27, 28, 29, 29') comprend un partie inférieure de carter (27) et une partie supérieure de carter (28), **en ce qu'**un bloc à haute pression (31) est disposé sur la partie supérieure de carter (28), dans lequel les canaux à haute pression (84, .., 87) sont placés, **en ce que** les deux machines à pistons axiaux (H1, H2) hydrostatiques comprennent chacune un bloc-cylindres (70) avec une majorité d'alésages de cylindre (68) et des pistons (67) logés dedans de manière mobile, lequel bloc-cylindres (70) est logé de manière rotative autour d'un axe (73) horizontal dans un carter pivotant (44), **en ce que** les carters pivotants (44) sont logés chacun avec un tourillon (46, 46') supérieur dans le bloc à haute pression (31) de manière à pivoter autour d'un axe de pivotement (45) vertical, et **en ce que** les alésages de cylindre (68) sont reliés par le biais de canaux de liaison (80, 81) s'étendant dans le carter pivotant (44) jusque dans les tourillons (46, 46') supérieurs aux canaux à haute pression (84, ..., 87) dans le bloc à haute pression (31).

11. Transmission à répartition de puissance selon la revendication 10, **caractérisée en ce que** pour chacune des deux machines à pistons axiaux (H1, H2) hydrostatiques, les alésages de cylindre (68) du bloc-cylindres (70) se trouvant au-dessus d'un plan médian horizontal peuvent être reliés par le biais d'orifices supérieurs (82) dans le carter pivotant (44) à un canal de liaison (80) supérieur et les alésages de cylindre (68) du bloc-cylindres (70) se trouvant au-dessous du plan médian horizontal peuvent être reliés par le biais d'orifices (83) inférieurs dans le carter pivotant (44) à un canal de liaison (81) inférieur, **en ce que** les canaux de liaison (80) supérieurs sont en liaison avec des premiers canaux à haute pression (84, 86) et les canaux de liaison (81) inférieurs sont en liaison avec des seconds canaux à haute pression (85, 87) dans le bloc à haute pression (31), et **en ce que** les premiers et les seconds canaux à haute pression (84, 86 ou 85, 87) peuvent être reliés au choix au moyen de soupapes (V1, ..., V4) placées dans le bloc à haute pression (31).

12. Transmission à répartition de puissance selon la revendication 11, **caractérisée en ce que** les premiers et les seconds canaux à haute pression (84, 86 ou 85, 87) dans le bloc à haute pression (31) sont fabriqués par moulage, et **en ce que** les soupapes (V1, ..., V4) sont réalisées comme des soupapes à commande hydraulique et sont placées dans des alésages qui sont réalisés transversalement aux canaux à haute pression (84, ..., 87) dans le bloc à haute pression (31).

13. Transmission à répartition de puissance selon la revendication 12, **caractérisée en ce que** les soupapes (V1, ..., V4) à commande hydraulique sont commandées par paires par le biais de premières soupapes (V5, V6) électromagnétiques.

14. Transmission à répartition de puissance selon la revendication 13, **caractérisée en ce qu'**aux premières soupapes (V5, V6) électromagnétiques est montée respectivement en parallèle une seconde soupape (V7, V8) électromagnétique pour des raisons de redondance ou est associée une bobine de remplacement électromagnétique.

15. Transmission à répartition de puissance selon l'une quelconque des revendications 10 à 14, **caractérisée en ce qu'**un axe de pivotement (48) est disposé respectivement sur les carters pivotants (44) des machines à pistons axiaux (H1, H2) hydrostatiques à une distance radiale prescrite du tourillon (46, 46') supérieur, et **en ce que** des vérins hydrauliques (32, 33) sont prévus sur la partie supérieure de carter (28), lesquels s'engagent sur les axes de pivotement (48) à des fins de pivotement du carter pivotant (44).

16. Transmission à répartition de puissance selon la revendication 15, **caractérisée en ce que** les vérins hydrauliques (32, 33) sont commandés par le biais de troisièmes soupapes (V9, V10) électromagnétiques, et **en ce qu'**une bobine de remplacement (94, 95) électromagnétique est associée respectivement aux troisièmes soupapes (V9, V10) électromagnétiques pour des raisons de redondance.

17. Transmission à répartition de puissance selon la revendication 7 et 8, **caractérisée en ce que** les couplages (K1, ..., K4) sont commandés par le biais de soupapes électromagnétiques (V11, ..., V15), **en ce que** les soupapes électromagnétiques (V11, ..., V15) sont placées dans des tiroirs de soupape (91, 93) bridés au carter (27, 28, 29, 29'), et **en ce que** la liaison hydraulique entre les soupapes (V11, ..., V 15) électromagnétiques et les couplages (K1, ..., K4) est effectuée par le biais de canaux s'étendant dans le carter (27, 28, 29, 29').

18. Transmission à répartition de puissance selon la revendication 17, **caractérisée en ce que** l'un des couplages (K1) est prévu pour le couplage de la seconde machine à pistons axiaux (H2) hydrostatique à l'arbre de sortie (18), et **en ce qu'**une autre soupape (V15) électromagnétique est montée en parallèle de la soupape (V14) électromagnétique associée à ce couplage (K1) pour des raisons de redondance.

19. Procédé d'exploitation d'une transmission à répartition de puissance selon la revendication 1, **caractérisé en ce que** le réglage des angles des machines à pistons axiaux (H1, H2) hydrostatiques, la liaison hydraulique entre les deux machines à pistons axiaux (H1, H2) hydrostatiques et la commande des couplages (K1, ..., K4) sont effectués de telle sorte que le déplacement en avant soit divisé en deux zones de roulement consécutives, et **en ce que** la part de puissance transmise par le biais de la branche hydraulique est respectivement à peu près à zéro à l'extrémité de chacune des deux zones de roulement.

20. Procédé selon la revendication 19, **caractérisé en ce que** l'engrenage planétaire à niveau (15) comprend des roues planétaires doubles (z2, z2') logées de manière rotative sur une traverse planétaire (49), pourvues d'une plus petite roue dentée (z2) et d'une plus grande roue dentée (z2') qui s'engrènent avec une plus grande roue solaire (z1) et une plus petite roue solaire (z1') et roulent avec la plus grande roue dentée (z2') dans une couronne (z3), **en ce que** la plus grande roue solaire (z1) est couplée à l'arbre d'entrée (12) et l'arbre de sortie (18) est couplé à la traverse planétaire (49), **en ce que** dans la première zone de roulement, la première machine à pistons axiaux (H1) hydrostatique est couplée par le biais d'un premier couplage (K3) à la couronne (z3) et la seconde machine à pistons axiaux (H2) hydrostatique est couplée par le biais d'un deuxième couplage (K1) à la traverse planétaire (49) et la première machine à pistons axiaux (H1) hydrostatique est exploitée en tant que pompe et la seconde machine à pistons axiaux (H2) hydrostatique en tant que moteur, et **en ce que** dans la seconde zone de roulement, la première machine à pistons axiaux (H1) hydrostatique est couplée par le biais du premier couplage (K3) à la couronne (z3) et la seconde machine à pistons axiaux (H2) hydrostatique est couplée par le biais d'un troisième couplage (K2) à la plus petite roue solaire (z1'), et la première machine à pistons axiaux (H1) hydrostatique est exploitée en tant que moteur et la seconde machine à pistons axiaux (H2) hydrostatique est exploitée en tant que pompe.

21. Procédé selon la revendication 20, **caractérisé en ce que** pour parcourir la première zone de roulement, la première machine à pistons axiaux (H1) hydrostatique parcourt en partant de l'angle de pivotement de 0°, toute la zone d'angle de pivotement jusqu'à l'angle de pivotement maximal, et la seconde machine à pistons axiaux (H2) hydrostatique parcourt en partant de l'angle de pivotement maximal toute la zone d'angle de pivotement jusqu'à l'angle de pivotement de 0°, et **en ce que** pour parcourir la seconde zone de roulement, la première machine à pistons axiaux (H1) hydrostatique parcourt en partant de l'angle de pivotement maximal toute la zone d'angle de pivotement jusqu'à l'angle de pivotement de 0° et la seconde machine à pistons axiaux (H2) hydrostatique parcourt en partant de l'angle de pivotement de 0°, toute la zone d'angle de pivotement jusqu'à l'angle de pivotement maximal.

22. Procédé selon la revendication 20, **caractérisé en ce que** la première machine à pistons axiaux (H1) hydrostatique peut être couplée par le biais d'un quatrième couplage (K4) à l'arbre d'entrée (12), et **en ce que** pour augmenter temporairement la force de traction, la première machine à pistons axiaux (H1) hydrostatique est couplée simultanément par le biais du premier couplage (K3) à la couronne (z3) et par le biais du quatrième couplage (K4) à l'arbre d'entrée (12).

23. Procédé selon l'une quelconque des revendications 19 à 22, **caractérisé en ce que** les couplages (K1, ..., K4) sont réalisés comme des couplages à disques multiples à commande hydraulique, et **en ce que** les couplages (K1, ..., K4) sont alimentés lors de leur actionnement en une pression de commutation qui dépend de la haute pression régnant dans la liaison hydraulique entre les machines à pistons axiaux (H1, H2) hydrostatiques.

24. Procédé selon l'une quelconque des revendications 19 à 23, **caractérisé en ce que** le réglage des angles des machines à pistons axiaux (H1, H2) hydrostatiques, la liaison hydraulique entre les deux machines à pistons axiaux (H1, H2) hydrostatiques et la commande des couplages (K1, ..., K4) sont effectués par le biais de soupapes (V5, ..., V6, V9, ..., V14) électromagnétiques, **en ce que** des moyens de remplacement (V7, V8 ; V15 ; 34, 35) sont prévus pour les soupapes électromagnétiques (V5, ..., V6, V9, ..., V 14), lesquels peuvent être utilisés en cas de panne d'une ou plusieurs soupapes (V5, ..., V6, V9, ..., V14) électromagnétiques pour maintenir des fonctions essentielles de la transmission à répartition de puissance, et **en ce qu'**en cas de panne d'une ou plusieurs soupapes (V5, ..., V6, V9, ..., V14) électromagnétiques, les moyens de remplacement (V7, V8 ; V15 ; 34, 35) afférents sont utilisés.

25. Procédé selon la revendication 24, **caractérisé en ce que** comme moyens de remplacement sont utilisées des soupapes (V7, V8 ; V15) électromagnétiques supplémentaires montées en parallèle et/ou des bobines de remplacement (34, 35) pour les soupapes (V9, V10) électromagnétiques.
